# EUROPÄISCHE PATENTANMELDUNG

(11) **EP 4 686 502 A1**
(43) Veröffentlichungstag der Anmeldung: **04.02.2026**
(21) Anmeldenummer: 25191422.2
(22) Anmeldetag: 23.07.2025
(51) Int. Cl.: B01D 35/12, B01D 61/14, B01D 61/18, B01D 65/02, B01D 65/08, F16K 11/072, F16K 11/08, F16K 11/085, C02F 3/12

(54) **ROTATIONSVENTIL**

(30) Priorität: 28.07.2024 LU 507870
(71) Anmelder: WILO SE, 44263 Dortmund (DE)
(72) Erfinder: Materne, Thomas, 44263 Dortmund (DE); Grigo, Mark, 44263 Dortmund (DE); Harms, Eberhard, 44263 Dortmund (DE)
(74) Vertreter: Cohausz Hannig Borkowski Wißgott

(57) **Zusammenfassung**

Die Erfindung betrifft ein Rotationsventil (1) zur zyklischen Zuführung von Druckluft (D) zu wenigstens zwei Wasserfiltrationseinheiten (21, 22). Es umfasst ein rohrförmiges Außengehäuse (2) mit zumindest einem ersten Ventilausgang (4) und einem axial dazu versetzten zweiten Ventilausgang (5), sowie eine um eine Längsachse (61) drehbar im Außengehäuse (2) angeordnete Trommel (3) mit einem Einlass (16) für die Druckluft (D) und zumindest einer ersten und einer zweiten Zuführungsöffnung (7, 8, 9), die axial zueinander versetzt sind. Bei einer Drehung der Trommel (3) um die Längsachse (61) überlappt die erste Zuführungsöffnung (7) mit dem ersten Ventilausgang (4) in einem ersten Winkelbereich, um die Druckluft (D) dem ersten Ventilausgang (4) zuzuführen, während sie in einem zweiten Winkelbereich nicht überlappt. Zudem überlappt die zweite Zuführungsöffnung (8) den zweiten Ventilausgang (5) in dem ersten Winkelbereich nicht, jedoch in dem zweiten Winkelbereich, um die Druckluft (D) dem zweiten Ventilausgang (5) zuzuführen. Des Weiteren umfasst das Rotationsventil (1) einen Aktor (10) zum Drehen der Trommel (3). Das Außengehäuse (2) ist aus axial gefügten Segmenten (2a, 2b, 2c) zusammengesetzt, von denen ein erstes Gehäusesegment (2a) den ersten Ventilausgang (4) und ein zweites Gehäusesegment (2b) den zweiten Ventilausgang (5) aufweist.

## Beschreibung

Die Erfindung betrifft ein Rotationsventil zur zyklischen Zuführung von Druckluft zu wenigstens einer ersten und einer zweiten Wasserfiltrationseinheit, umfassend ein rohrförmiges Außengehäuse mit zumindest einem ersten Ventilausgang zur Versorgung der ersten Wasserfiltrationseinheit mit der Druckluft und einem axial zu diesem ersten Ventilausgang versetzten zweiten Ventilausgang, zur Versorgung der zweiten Wasserfiltrationseinheit mit der Druckluft, eine um eine Längsachse drehbar im Außengehäuse angeordnete Trommel mit einem Einlass für die Druckluft und zumindest einer ersten und einer zweiten Zuführungsöffnung, die axial zueinander versetzt sind, wobei bei einer Drehung der Trommel um die Längsachse die erste Zuführungsöffnung den ersten Ventilausgang in einem ersten Winkelbereich ganz oder teilweise überlappt, um die Druckluft dem ersten Ventilausgang zuzuführen, und in einem zweiten Winkelbereich nicht überlappt, und die zweite Zuführungsöffnung den zweiten Ventilausgang in dem ersten Winkelbereich nicht überlappt und in dem zweiten Winkelbereich ganz oder teilweise überlappt, um die Druckluft dem zweiten Ventilausgang zuzuführen, und umfassend einen Aktor, der mit der Trommel in Wirkverbindung steht, um diese relativ zum Außengehäuse zu drehen.

Ventile der genannten Art werden im Bereich der Abwasseraufbereitung eingesetzt, genauer gesagt im Bereich der Gewinnung von Trinkwasser durch Mikrofiltration oder Ultrafiltration. Sie sind dafür vorgesehen, Druckluft zyklisch zu wenigstens einer ersten und einer zweiten in einem Tank getauchten Wasserfiltrationseinheit zuzuführen und werden deshalb im Fachjargon auch als "Air Cycling Valve" bezeichnet. An der Wasserfiltrationseinheit wird Trinkwasser mittels Permeation von Abwasser durch eine semipermeable Membran gewonnen, die den wesentlichen Funktionsbestandteil der Wasserfiltrationseinheit bildet. Die Membran sorgt für die Mikrofiltration oder Ultrafiltration des Abwassers. Eine Wasserfiltrationseinheit wird deshalb auch als Membranfiltersystem bezeichnet. Mehrere solcher Wasserfiltrationseinheiten können modulartig in dem Abwassertank angeordnet sein. Infolge der Permeation bleiben Feststoffe im Abwasser auf jener Seite der semipermeablen Membran haften, die dem Abwasser ausgesetzt ist. Die Feststoffe beeinträchtigen die Permeabilität der semipermeablen Membran und faulen, wobei sie die Integrität der Membran beeinträchtigen können. Sie müssen deshalb in regelmäßigen zeitlichen Abständen abgeführt werden. Hierzu wird die Druckluft verwendet, die zu unterhalb der Wasserfiltrationseinheiten angeordneten Belüftungseinheiten geführt wird, aus denen Luftblasen aufsteigen. Diese strömen abwasserseitig an der Oberfläche der semipermeablen Membran entlang, lösen die Feststoffe ab und reißen sie mit. Die Druckluftzuführung wird deshalb auch als Spülung bezeichnet. Anordnungen von getauchten Wasserfiltrationseinheiten samt Spülverfahren mittels Luftblasen sind beispielsweise in den US-Patentanmeldungen US20010027950 A1 und US20070289362A1 beschrieben.

Das Rotationsventil ist dafür vorgesehen, die Druckluft abwechselnd den Wasserfiltrationseinheiten zuzuführen. Hierzu ist an dem ersten Ventilausgang eine erste Leitung angeschlossen, die zu der ersten Wasserfiltrationseinheit führt, genauer gesagt, einer Blasen erzeugenden Belüftungseinheit unterhalb der ersten Wasserfiltrationseinheit, so dass die Blasen in der ersten Wasserfiltrationseinheit aufsteigen. Entsprechend ist an dem zweiten Ventilausgang eine zweite Leitung angeschlossen, die zu der zweiten Wasserfiltrationseinheit führt, genauer gesagt, einer Blasen erzeugenden Belüftungseinheit unterhalb der zweiten Wasserfiltrationseinheit, so dass die Blasen in der zweiten Wasserfiltrationseinheit aufsteigen.

Die abwechselnde Zuführung der Druckluft zum ersten und zweiten Ventilausgang wird durch die sich innerhalb des Außengehäuses drehende Trommel erreicht, die von dem Aktor angetrieben wird. Infolge der Drehung der Trommel wird jede der Zuführungsöffnungen zyklisch (periodisch) zu dem korrespondierenden, d.h. auf derselben axialen Höhe liegenden, Ventilausgang gedreht, bis sie fluchtend zueinander ausgerichtet sind, und anschließend unter Fortsetzung der kontinuierlichen Drehbewegung wieder von dem entsprechenden Ventilausgang weggedreht.

Aufgabe der vorliegenden Erfindung ist es, den konstruktiven Aufbau eines Rotationsventils der eingangs genannten Art sowie dessen Herstellungsverfahren zu vereinfachen.

Diese Aufgabe wird mit einem Rotationsventil mit den Merkmalen von Anspruch 1 gelöst. Vorteilhafte Weiterbildungen sind in den Unteransprüchen angegeben und werden nachfolgend erläutert.

Erfindungsgemäß ist vorgesehen, ein Rotationsventil der eingangs genannten Art dadurch weiterzubilden, dass das Außengehäuse aus axial gefügten Segmenten zusammengesetzt ist, von denen ein erstes Gehäusesegment den ersten Ventilausgang und ein zweites Gehäusesegment den zweiten Ventilausgang aufweist. Somit muss das Außengehäuse nicht mehr in einem großen Stück hergestellt werden. Die Gehäusesegmente sind kleiner und leichter, wodurch die Handhabung und die Herstellung des Außengehäuses vereinfacht werden. Gleichzeit ist das Rotationsventil im Wartungsfall besonders servicefreundlich.

Wird das Außengehäuse durch Gießen in einer Gießform hergestellt, wird außerdem diese Gießform bezüglich ihrer Geometrie vereinfacht. Das Außengehäuse kann allerdings in einer Ausführungsvariante aus Blech gebildet sein.

Der Kern der Erfindung besteht in dem durch die Segmentierung des Außengehäuses erreichten modularen Design, mit dem eine hohe Variabilität des Rotationsventils erreicht wird. Das modulare Design kann für alle gewünschten Versionen, insbesondere Größen bzw. Längen des Rotationsventils verwendet werden, da aus den Gehäusesegmenten verschiedene Versionen gebildet werden können. Im Falle der Herstellung des Außengehäuses im Gussverfahren reduziert sich damit die Anzahl der für die verschiedenen Versionen benötigten Gießformen erheblich, bestenfalls sogar auf eine einzige Gießform. In diesem beispielhaften Fall sind dann alle Gehäusesegmente identisch. Dies hat den Vorteil, dass beim Zusammensetzen des Außengehäuses nicht zwischen verschiedenen Gehäusesegmenten unterschieden werden muss.

Ein großer Vorteil der Segmentierung des Außengehäuses besteht darin, dass die radiale Richtung, in die die Ventilausgänge für den bestimmungsgemäßen Gebrauch abgehen müssen, erst bei der Montage der Gehäusesegmente festgelegt werden muss und sogar nachträglich geändert werden kann. Dies erfolgt, indem die Gehäusesegmente um einen Winkel um die Längsachse des Rotationsventils versetzt zueinander aneinandergefügt werden. So können der erste Ventilausgang und der zweite Ventilausgang beispielsweise um 45°, 90°, 120° oder 180° versetzt zueinander liegen. Selbstverständlich sind auch andere Winkelversatze grundsätzlich möglich. Außerdem ist die winklige Ausrichtung beider bzw. aller Ventilausgänge unabhängig voneinander möglich, d.h. in einer axialen Anordnung der Ventilausgänge übereinander sowohl des oberen als auch des unteren Ventilausgangs und auch jedes weiteren Ventilausgangs, sofern vorhanden. Im Ergebnis muss nicht mehr für jeden gewünschten Winkelversatz zwischen den Ventilausgängen ein eigenes einteiliges Außengehäuse angefertigt, insbesondere gegossen, und gelagert werden.

Ein weiterer Vorteil des erfindungsgemäßen modularen Aufbaus besteht darin, dass auch die Anzahl der Ventilausgänge variabel ist. Das erfindungsgemäße Rotationsventil hat mindestens zwei Ventilausgänge, es kann aber auch drei, vier oder sogar fünf axial zueinander versetzte Ventilausgänge aufweisen. Aufgrund der Segmentierung des Außengehäuses, d.h. der Modulbauweise, müssen auch in Bezug zur Anzahl der Ventilausgänge keine verschiedenen einteiligen Außengehäuse mit 2, 3, 4 oder 5 Ventilausgängen mehr angefertigt und auf Lager gehalten werden, sondern nur die Gehäusesegmente. Denn das Außengehäuse kann je nach Anwendungsfall aus der benötigten Anzahl an Gehäusesegmenten zusammengesetzt werden.

Die Längsachse, um die die Trommel drehbar ist, ist vorzugsweise identisch zur Längsachse des Außengehäuses, die der Längsachse des Rotationsventils entspricht. Der axiale Versatz der Ventilausgänge und der axiale Versatz der Zuführungsöffnungen ist jeweils bezogen auf die Längsachse.

Der Einlass für die Druckluft in die Trommel ist in Bezug zur Strömungsrichtung idealerweise axial. Die Zuführungsöffnungen sind dagegen in Bezug zur Strömungsrichtung radial orientiert.

In einer Ausführungsvariante des erfindungsgemäßen Rotationsventils kann das Außengehäuse ein drittes Gehäusesegment mit einem dritten Ventilausgang aufweisen, der zur Versorgung einer dritten Wasserfiltrationseinheit mit der Druckluft vorgesehen ist, wobei die Trommel eine dritte Zuführungsöffnung derart aufweist, dass bei der Drehung der Trommel um die Längsachse die dritte Zuführungsöffnung den dritten Ventilausgang in einem dritten Winkelbereich ganz oder teilweise überlappt, um die Druckluft dem dritten Ventilausgang zuzuführen, und in dem ersten und zweiten Winkelbereich nicht überlappt und in dem dritten Winkelbereich die erste Zuführungsöffnung den ersten Ventilausgang und die zweite Zuführungsöffnung den zweiten Ventilausgang nicht überlappt. Das bedeutet, dass das Rotationsventil im Betrieb bei einer Drehung der Trommel abwechselnd und zyklisch wiederholend Druckluft der ersten, der zweiten und der dritten Wasserfiltrationseinheit zuführt.

Es sei angemerkt, dass die vorgenannten Winkelbereiche, d.h. der erste, zweite und dritte Winkelbereich, voneinander verschieden sind und sich auch nicht überlappen. Dies gilt auch für die Ausführungsvariante des Rotationsventils mit nur zwei Gehäusesegmenten.

In einer anderen Weiterbildung kann das Außengehäuse ein viertes Gehäusesegment mit einem vierten Ventilausgang aufweisen, der zur Versorgung einer vierten Wasserfiltrationseinheit mit der Druckluft vorgesehen ist. Die Trommel weist dann eine vierte Zuführungsöffnung derart auf, dass bei der Drehung der Trommel um die Längsachse die vierte Zuführungsöffnung den vierten Ventilausgang in einem weiteren Winkelbereich ganz oder teilweise überlappt, um die Druckluft dem vierten Ventilausgang zuzuführen.

Dieser weitere Winkelbereich kann sich in einer Variante von dem ersten, zweiten und dritten Winkelbereich unterscheiden und sich auch nicht mit diesen überlappen. Der weitere Winkelbereich liegt dann bezogen auf die anderen Winkelbereich so, dass die vierte Zuführungsöffnung den vierten Ventilausgang in dem ersten, zweiten und dritten Winkelbereich nicht überlappt und in dem weiteren Winkelbereich die erste Zuführungsöffnung den ersten Ventilausgang, die zweite Zuführungsöffnung den zweiten Ventilausgang und die dritte Zuführungsöffnung den ersten dritten Ventilausgang nicht überlappt. Das bedeutet, dass das Rotationsventil im Betrieb bei einer Drehung der Trommel abwechselnd und zyklisch wiederholend Druckluft der ersten, der zweiten, der dritten und der vierten Wasserfiltrationseinheit zuführt.

In einer anderen Ausführungsvariante kann der weitere Winkelbereich identisch zum ersten, zweiten oder dritten Winkelbereich sein. Das bedeutet, dass das Rotationsventil im Betrieb bei einer Drehung der Trommel zwar abwechselnd und zyklisch wiederholend Druckluft der ersten, der zweiten, der dritten und der vierten Wasserfiltrationseinheit zuführt, die vierte Wasserfiltrationseinheit aber zeitgleich zur ersten, zweiten oder dritten Wasserfiltrationseinheit mit Druckluft speist.

Von besonderem Vorteil ist es, wenn auch die Trommel aus axial gefügten Segmenten zusammengesetzt ist, wobei ein erstes Trommelsegment die erste Zuführungsöffnung und ein zweites Trommelsegment die zweite Zuführungsöffnung aufweist. Hierdurch werden der konstruktive Aufbau und die Herstellung der Trommel vereinfacht. Ferner treffen die zuvor in Bezug auf das Außengehäuse genannten Vorteile dann auch auf die Trommel zu. Insbesondere kann die radiale Richtung, in die die Zuführungsöffnungen für den bestimmungsgemäßen Gebrauch abgehen müssen, erst bei der Montage der Trommelsegmente festgelegt werden und die Richtung kann sogar nachträglich geändert werden. Dies erfolgt, indem die Trommelsegmente um einen Winkel um die Längsachse des Rotationsventils versetzt zueinander aneinandergefügt werden. So können die erste Zuführungsöffnung und die zweite Zuführungsöffnung beispielsweise um 180° versetzt zueinander liegen. Diese Anordnung ist für eine zyklische Druckluftversorgung geeignet, wenn der erste und der zweite Ventilausgang keinen Winkelversatz zueinander haben, d.h. übereinander liegen. Ist dagegen ein Winkelversatz zwischen dem ersten und der zweiten Ventilausgang vorhanden, sollte dieser auch zwischen der ersten und zweiten Zuführungsöffnung bestehen, vorzugsweise derart, dass wenn die erste Zuführungsöffnung mit der ersten Ventilausgang fluchtet, die zweite Zuführungsöffnung diametral zur zweiten Ventilausgang liegt, um eine symmetrische Versorgung der Wasserfiltrationseinheiten mit Druckluft über eine Umdrehung der Trommel zu erreichen. Im Ergebnis muss auch hier nicht mehr für jeden erforderlichen Winkelversatz zwischen den Zuführungsöffnungen eine eigene einteilige Trommel angefertigt und gelagert werden.

Infolge der Segmentierung der Trommel ist auch hier die Anzahl der Zuführungsöffnungen variabel. Das erfindungsgemäße Rotationsventil hat mindestens zwei Zuführungsöffnungen, es kann aber auch drei, vier oder sogar fünf axial zueinander versetzte Zuführungsöffnungen aufweisen. Aufgrund der Segmentierung der Trommel, d.h. der Modulbauweise, müssen auch in Bezug zur Anzahl der Zuführungsöffnungen keine verschiedenen einteiligen Trommeln mit 2, 3, 4 oder 5 Zuführungsöffnungen mehr angefertigt und auf Lager gehalten werden, sondern nur die Trommelsegmente. Denn die Trommel kann je nach Anwendungsfall aus der benötigten Anzahl an Trommelsegmenten zusammengesetzt werden.

Die Anzahl der Zuführungsöffnungen ist im einfachsten Fall identisch zur Anzahl der Ventilausgänge. Es sei jedoch angemerkt, dass es grundsätzlich auch möglich ist, dass ein Trommelsegment mehr als nur eine Zuführungsöffnung aufweist. Beispielsweise können zwei oder mehr dieser Zuführungsöffnungen symmetrisch über den Umfang verteilt sein.

Für einen einfachen konstruktiven Aufbau des Rotationsventils ist es außerdem sinnvoll, wenn die Anzahl der Trommelsegmente identisch der Anzahl der Gehäusesegmente ist. Beispielsweise kann die Trommel ein drittes Trommelsegment mit der dritten Zuführungsöffnung aufweisen, und gegebenenfalls auch ein viertes Trommelsegment mit der vierten Zuführungsöffnung.

Vorzugsweise haben die Trommel- und Gehäusesegmente im Wesentlichen dieselbe axiale Länge, so dass keines der Segmente gegenüber dem anderen vorspringt oder zurückversetzt ist.

In einer Ausführungsvariante kann jedes Gehäusesegment an einem Axialende einen ringförmigen axialen Vorsprung aufweisen, mit dem es in das benachbarte Gehäusesegment oder in einen Gehäuseflansch hineinragt. Der Gehäuseflansch kann das Außengehäuse an einem Axialende in axialer Richtung begrenzen. Um einen Formschluss zwischen benachbarten Gehäusesegmenten zu erreichen, kann der Vorsprung in einen ringförmigen axialen Rücksprung ragen, der an der Stirnseite des benachbarten Gehäusesegments oder im Gehäuseflansch ausgebildet ist. Der Vorsprung kann durchgehend oder segmentiert sein. Zudem kann auch der Rücksprung durchgehend oder segmentiert sein. Eine Segmentierung des Vorsprungs und des Rücksprungs hat den Vorteil, dass für eine bezogen auf die Längsachse des Rotationsventils winklige Ausrichtung zweier benachbarter Gehäuseteile zueinander nur diskrete Positionen möglich sind.

Für den Erhalt einer festen Verbindung können die Gehäusesegmente an ihren Axialenden mittels des entsprechenden Vorsprungs miteinander verpresst sein. Ferner kann ein Gehäusesegment mittels seines Vorsprungs mit dem Gehäuseflansch verpresst sein.

Alternativ oder kumulativ kann das Außengehäuse an seinen axialen Stirnseiten jeweils an einen Gehäuseflansch anschließen und mittels Zugstangen, die an den Gehäuseflanschen befestigt sind, zwischen den Gehäuseflanschen verspannt sein. Auch hiermit wird eine feste Verbindung zwischen den Gehäuseteilen erreicht. Die Axialenden der Zugstangen können mit einem Gewinde versehen sein, das durch eine Bohrung im jeweiligen Gehäuseflansch geführt ist und über diesem vorragt, so dass eine Mutter auf das Gewinde aufgesetzt und gegen den Gehäuseflansch geschraubt werden kann. In einer Ausführungsvariante kann nur an einem Axialende der Zugstangen ein Gewinde sein, während das andere Axialende einen Kopf, beispielsweise einen Schraubenkopf trägt.

In einer Ausführungsvariante können die Gehäusesegmente alternativ oder zusätzlich zu dem genannten Vorsprung an ihren axialen Stirnseiten jeweils einen radial nach außen gerichteten Montageflansch aufweisen, mit dem die Gehäusesegmente miteinander oder mit einem Gehäuseflansch befestigt sind. Auf die Zugstangen kann in diesem Fall verzichtet werden. Die Montageflansche dienen außerdem der Zentrierung und zur axialen Lagerung, sofern das Rotationsventil mit vertikaler Längsachse aufgestellt ist.

Der oben bei den Gehäusesegmenten genannte Formschluss und Kraftschluss kann auch bei den Trommelsegmenten vorgesehen werden. So kann jedes Trommelsegment in einer Ausführungsvariante an einem Axialende einen ringförmigen axialen Vorsprung aufweisen, mit dem es in das benachbarte Trommelsegment oder in einen Gehäuseflansch hineinragt. Hierzu kann ein ringförmiger axialen Rücksprung vorgesehen sein, insbesondere an der Stirnseite des benachbarten Gehäusesegments oder im Gehäuseflansch. Der Vorsprung kann durchgehend oder segmentiert sein. Zudem kann auch der Rücksprung durchgehend oder segmentiert sein.

Vorzugsweise sind auch die Trommelsegmente an ihren Axialenden mittels des jeweiligen Vorsprungs miteinander verpresst, so dass das Drehmoment von einem Trommelsegment an das benachbarte andere Trommelsegment übertragen wird.

Der Aktor kann ein Elektromotor oder ein Getriebe, gegebenenfalls auch ein Getriebemotor sein.

Zur mechanischen Verbindung der Trommel mit dem Aktor bzw. zur Drehmomentübertragung kann eine Trommelhalterung vorgesehen sein, die einerseits drehfest mit einer Antriebswelle des Aktors, andererseits drehfest mit der Trommel verbunden ist. Zur Verbindung der Trommelhalterung mit der Trommel, kann die Trommelhalterung einen ringförmigen axialen Vorsprung identisch zu demjenigen der Trommelsegmente aufweisen, um formschlüssig und gegebenenfalls auch kraftschlüssig in einen Rücksprung an der axialen Stirnseite des zur Trommelhalterung benachbarten Trommelsegments zu ragen.

Die Trommelhalterung kann ein im Wesentlichen scheiben- oder tellerförmiges Bauteil sein, an dessen Außenumfang der ringförmige Vorsprung axial vorsteht.

Die Ventilausgänge im Außengehäuse können jeweils von einem Anschlussstutzen umrahmt sein, an den eine Druckleitung zu einer der Wasserfiltrationseinheiten anschließbar ist. Alternativ können die Ventilausgänge in einen Rohrstutzen münden, der an das Außengehäuse anschließt und an seinem freien Ende einen Flansch zur Befestigung der Druckleitung aufweisen kann.

Die Trommel kann einen Innendurchmesser von 80mm bis 250mm aufweisen, beispielsweise 125mm. Mit einem Durchmesser von 80mm ist das Rotationsventil zum Anschließen an Rohrleitungen mit einer Nennweite von DN80 geeignet. Entsprechend ist das Rotationsventil zum Anschließen an Rohrleitungen mit einer Nennweite von DN125 geeignet, wenn der Innendurchmesser der Trommel 125mm beträgt, und zum Anschließen an Rohrleitungen mit einer Nennweite von DN250 geeignet, wenn der Innendurchmesser der Trommel 250mm beträgt

Es kann zusätzlich zu den vorgenannten Winkelbereichen vorgesehen sein, dass es wenigstens einen Übergangswinkelbereich zwischen dem ersten und zweiten Winkelbereich gibt, in dem die erste Zuführungsöffnung den ersten Ventilausgang teilweise überlappt und gleichzeitig die zweite Zuführungsöffnung den zweiten Ventilausgang teilweise überlappt. Das bedeutet, dass in dem Übergangswinkelbereich dem ersten und dem zweiten Ventilausgang gleichzeitig Druckluft zugeführt wird. Damit werden Druckspitzen in der Trommel verhindert, die dann entstehen, wenn keine Zuführungsöffnung mit einem der Ventilausgänge überlappt, d.h. die Druckluft in der Trommel an keinen Ventilausgang abgegeben werden kann. Denn die Druckluft wird der Trommel kontinuierlich zugeführt.

Übergangswinkelbereiche, in denen zwei Ventilausgänge gleichzeitig geöffnet sind, können auch bei der Ausführungsvariante des Rotationsventils mit drei oder vier Gehäusesegmenten vorgesehen sein. Sie liegen dann bei der Ausführungsvariante des Rotationsventils mit drei Gehäusesegmenten zwischen dem ersten und zweiten Winkelbereich, zwischen dem zweiten und dritten Winkelbereich sowie zwischen dem dritten und ersten Winkelbereich. In gleicher Weise liegen dann bei der Ausführungsvariante des Rotationsventils mit vier Gehäusesegmenten Übergangsbereich zwischen dem ersten und zweiten, zweiten und dritten, dritten und vierten sowie vierten und ersten Winkelbereich.

Vorzugsweise können die Gehäusesegmente im Bereich ihres einen Axialendes und im Bereich des gegenüberliegenden anderen Axialendes jeweils einen die Trommel lagernden Lagerring tragen, dessen Innenumfangsfläche an der Trommel anliegt. Die Lagerringe halten die Trommel in Position und bilden mit ihrer radialen Innenumfangsfläche eine Gleitfläche für die Trommel. Des Weiteren bewirken die Lagerringe, dass der Ringraum zwischen dem Außengehäuse und der Trommel ebenfalls segmentiert ist. Die Lagerringe können flach und bandförmig sein.

Die bestimmungsgemäße Anordnung des Rotationsventils ist bevorzugt stehend, so dass die Längsachse vertikal ist. Jedoch ist auch eine Anordnung mit horizontaler Längsachse möglich.

Der Aktor kann an einem axialen Ende des Außengehäuses angeordnet sein, insbesondere an einem das Außengehäuse an einem axialen Ende abschließenden Gehäuseflansch. Somit ist der Aktor von außen gut zugänglich und dessen Montage ist unabhängig von der Anordnung der Gehäusesegmente.

Geeigneterweise ist ein Dichtungsring im Verbindungsbereich radial zwischen zwei benachbarten Gehäusesegmenten angeordnet, um den Spalt zwischen den Gehäusesegmente nach außen abzudichten. Insbesondere kann der Dichtungsring in einem Ringraum liegen, der durch zwei axial zueinander versetzte Stufen gebildet ist, von denen eine Stufe im Vorsprung des einen Gehäusesegments und eine Stufe im Rücksprung des anderen Gehäusesegments vorliegt.

Weitere Merkmale, Vorteile und Wirkungen der Erfindung werden nachfolgend anhand von Ausführungsbeispielen und der beigefügten Figuren erläutert. Bei den Figuren behalten identische oder funktionsgleiche Elemente von Figur zu Figur dasselbe Bezugszeichen.

Wie bereits angesprochen, kann das Außengehäuse bzw. können die einzelnen Gehäusesegmente in einer Ausführungsvariante aus Blech hergestellt sein, beispielsweise mit einer Wandstärke zwischen 0,5 und 1,5mm. Bei dieser Ausführungsvariante können auch die Rohrstutzen, in die die Ventilausgänge münden, aus Blech bestehen und an die Gehäusesegmente angeschweißt sein.

Um zwei benachbarte Gehäusesegmente aus Blech miteinander zu verbinden kann ein Verbindungsring vorgesehen sein, der so geformt ist, dass er einerseits zwischen den zueinander gerichteten axialen Stirnseiten der beiden Gehäusesegmente angeordnet ist und an diesen anliegt und andererseits die Gehäusesegmente jeweils außenumfänglich umgreift. Der Verbindungsring dient der Zentrierung und gegebenenfalls der Lagerung der Gehäusesegmente, da er -bei vertikaler Anordnung des Rotationsventils- auf dem unteren Gehäusesegment aufliegt und das obere Gehäusesegment trägt. Zudem kann Verbindungsring zwei Dichtringe tragen, von denen je einer am Außenumfang des jeweiligen Gehäusesegments anliegt und den Radialspalt zwischen Gehäusesegment und Verbindungsring abdichtet. Somit dient der Verbindungring auch der Abdichtung. Des Weiteren kann der Verbindungsring auf seiner Innenumfangsseite einen Lagerring tragen und somit als Lagerung für die Trommel dienen.

Bei allen vorstehend beschriebenen Ausführungsvarianten kann vorgesehen sein, dass wenigstens einer der Ventilausgänge, mehrere oder alle Ventilausgänge Rücklaufsperren aufweisen. Sie wirkt wie ein Einwegeventil, so dass sie in Richtung vom Rotationsventil weg Druckluft aus dem Rotationsventil herauslässt, eine Strömungsverbindung in entgegengesetzter Richtung, d.h. in das Rotationsventil hinein, jedoch sperrt. Dies verhindert, dass verunreinigtes Wasser, wie Grau- oder Schwarzwasser, das bestimmungsgemäß mit der ersten und zweiten Wasserfiltrationseinheit gefiltert bzw. aufbereitet werden soll, über die Ventilausgänge in das Rotationsventil, gegebenenfalls von dort auch in den die Druckluft bereitstellenden Kompressor und darüber hinaus in die Umwelt gelangen kann. Insbesondere bei der Verwendung des erfindungsgemäßen Rotationsventils bei Wasseraufbereitungsanlagen auf Schiffen, ist eine solche Rücklaufgefahr aufgrund der wellen- und windbedingten Nick- und Rollbewegung des Schiffes gegeben.

Die Rücklaufsperre kann in einer einfachen Ausführungsvariante eine Rückschlagklappe sein, bei der eine steife oder elastische schwenkbare Klappe als Ventilelement den entsprechenden Ventilausgang verschließt und durch die Druckluft öffnet. Alternativ kann die Rücklaufsperre durch ein sogenanntes Schirmventil oder Pilzventil gebildet sein, bei dem das Ventilelement die Form eines elastischen Schirms oder elastischen Pilzkopfes besitzt, der von einer Scheibe mit Strömungsöffnungen absteht und diese im entspannten Zustand abdeckt, wohingegen er im Falle einer Druckluftströmung in Strömungsrichtung umklappt und die Strömungsöffnungen freigibt. In einer weiteren Ausführungsvariante kann die Rücklaufsperre als Ventilelement eine Membran aufweisen, welche Strömungsöffnungen abdeckt und bei Druckluftzufuhr freigibt. Beliebige andere Varianten sind ebenfalls denkbar.

Die Rücklaufsperre kann ein separates Bauteil sein, das beispielsweise an den Anschlussstutzen oder Anschlussflansch eines Gehäusesegments oder an einen sich daran anschließenden Rohranschluss angeschlossen sein oder werden kann. Alternativ kann die Rücklaufsperre in den Anschlussstutzen oder den Rohranschluss integriert sein.

In einer Ausführungsvariante kann vorgesehen sein, dass die Trommelsegmente innerhalb eines begrenzten Umfangswinkelbereichs relativ zueinander drehbar sind und erst mit Erreichen eines ein Ende des Umfangswinkelbereichs definierenden Anschlags eine Drehmitnahme eines benachbarten zweiten Trommelsegments durch ein sich drehendes erstes Trommelsegment erfolgt. Dieses Prinzip kann in nur eine Drehrichtung oder in beide Drehrichtungen realisiert sein. Die relative Drehbarkeit der Trommelsegmente zueinander innerhalb des begrenzten Umfangswinkelbereichs bewirkt, dass die Trommelsegmente bezogen auf ihre Drehachse in einer bestimmten Konfiguration winklig zueinander ausgerichtet werden können. Diese Konfiguration kann, je nach Drehrichtung, so sein, dass alle Ventilausgänge deckungsgleich übereinanderliegen, so dass alle Ventilausgänge gleichzeitig geöffnet sind. Der Umfangswinkelbereich beträgt hierzu dann 360° geteilt durch die Anzahl n der Ventilausgänge respektive Ventilsegmente. Bei zwei Ventilsegmenten beträgt der Umfangswinkelbereich somit 180°, bei drei Ventilsegmenten 120° und bei vier Ventilsegmenten 90°. Dies realisiert eine Sicherheitsfunktion.

Technisch betrachtet, kann die winklig begrenzte Drehbarkeit der Trommelsegmente beispielsweise durch eine Nut-Zapfen-Verbindung derart umgesetzt sein, dass sich ein vorstehender Zapfen des genannten ersten Trommelsegments in eine Umfangsnut des genannten zweiten Trommelsegments hineinragt. Dies kann axial oder radial realisiert sein. Die Umfangsnut erstreckt sich sinnvollerweise über einen Winkel von 360°/n konzentrisch um die Drehachse und ist zu beiden Drehrichtungen durch ein Ende begrenzt, das einen Anschlag für den Zapfen bildet. Somit definiert jedes Ende der Nut eine von zwei Konfigurationen bzw. Ausrichtungen der Trommelsegmente zueinander. Die vorstehend genannte Konfiguration, bei der alle Ventilausgänge deckungsgleich übereinanderliegen, ist eine zweite Konfiguration, die vorzugsweise bei demjenigen Ende der Nut besteht, das bei inverser Drehrichtung des Aktors den Anschlag für den Zapfen bildet. Eine erste Konfiguration der Trommelsegmente liegt dann bei dem anderen Ende der Nut vor und hat eine Ausrichtung der Trommelsegmente zueinander derart, dass deren Ventilausgänge um 360°/n zueinander versetzt positioniert sind. Dies entspricht dann der Standardkonfiguration, die bei vorwärtsdrehendem Aktor vorliegt.

Wir nun ausgehend von dieser Standardkonfiguration die Drehrichtung des Aktors invertiert, geschieht Folgendes: das vom Aktor direkt angetriebene erste Trommelsegment dreht sich rückwärts, seinen Zapfen in der Nut des benachbarten zweiten Trommelsegments geführt, während das zweite Trommelsegment und jedes weitere Trommelsegment stillsteht. Das erste Trommelsegment richtet sich somit relativ zum zweiten Trommelsegment aus. Der Zapfen erreicht dabei irgendwann das Ende der Nut und übt erst dann ein Drehmoment auf das zweite Trommelsegment aus, wodurch dieses dann vom ersten Trommelsegment drehend mitgenommen, d.h. angetrieben wird. In dieser erreichten Konfiguration liegen dann die Ventilausgänge des ersten und zweiten Trommelsegments, von oben oder unten betrachtet, deckungsgleich übereinander.

Besitzt das Rotationsventil ein drittes Ventilsegment, ruht dessen Trommelsegment zu Beginn der erreichten (Zwischen-)Konfiguration. Korrespondierend zur vorstehenden Betrachtung ist nun dessen Trommelsegment das benachbarte (anzutreibende) zweite Trommelsegment, während das Trommelsegment des zweiten Ventilsegments das (antreibende) erste Trommelsegment ist. Das vom Trommelsegment des ersten Ventilsegments angetriebene Trommelsegment des zweiten Ventilsegments dreht sich rückwärts, seinen Zapfen in der Nut des benachbarten Trommelsegments des dritten Ventilsegments geführt, während das Trommelsegment des dritten Ventilsegments ruht. Die Trommelsegmente des ersten und zweiten Ventilsegments richten sich somit relativ zum Trommelsegment des dritten Ventilsegments aus. Der Zapfen des angetriebenen Trommelsegments erreicht dabei irgendwann das Ende der Nut des Trommelsegments des dritten Ventilsegments und übt erst dann ein Drehmoment auf dieses dritte Trommelsegment aus, wodurch es dann vom Trommelsegment des zweiten Ventilsegments drehend mitgenommen, d.h. angetrieben wird. In dieser erreichten Konfiguration liegen dann die Ventilausgänge des ersten, zweiten und dritten Trommelsegments, von oben oder unten betrachtet, deckungsgleich übereinander. Dieses Prinzip lässt sich selbstverständlich auf Rotationsventile mit vier oder fünf Ventilsegmente entsprechend erweitern. Insgesamt betrachtet, liegen nach einer vollen Umdrehung der Trommel in inverser Richtung entsprechend der zweiten Konfiguration alle Ventilausgänge deckungsgleich übereinander.

Es sei angemerkt, dass das vorstehende Konzept auch bei einem nichtsegmentierten Ventilgehäuse möglich ist, d.h. wenn nur die Trommel segmentiert ist.

Dreht der Aktor anschließend wieder in normaler (nicht-invertierter) Drehrichtung, wird zunächst nur wieder das erste Trommelsegment relativ zum zweiten (und gegebenenfalls dritten) Trommelsegment gedreht, bis deren Ventilausgängen winklig um 360°/n versetzt sind. Anschließend nimmt das erste Trommelsegment das zweite Trommelsegment mit. Besitzt das Rotationsventil ein drittes Ventilsegment, ruht dessen Trommelsegment zunächst wieder. Das zweite Trommelsegment wird relativ zum dritten Trommelsegment gedreht, bis auch deren Ventilausgängen winklig um 360°/n versetzt sind. Anschließend nimmt das zweite Trommelsegment das dritte Trommelsegment mit, so dass sich alle Trommelsegmente der Trommel drehen und wieder die erste Konfiguration erreicht ist.

Ist ein Ventilausgang des Rotationsventils geöffnet, kann es sein, dass Druckluft infolge des Drucks in diesem Ventilausgang von diesem Ventilausgang in einen radialen Ringspalt zwischen der Trommel und dem Außengehäuse und durch das Rotationsventil hindurch zu einem anderen Ventilausgang strömt, wo es dann entweicht. Um diese innere Leckage der Druckluft zu reduzieren, können unterschiedliche Maßnahmen ergriffen werden, wie nachfolgend beschrieben.

In einer Ausführungsvariante kann vorgesehen sein, dass innerhalb eines jeden Ventilausgangs, genauer gesagt in jedem Anschlussstutzen oder Rohrstutzen eines Ventilsegments, ein Einsatz in Form eines Rohrabschnitts eingesetzt ist, der aus dem jeweiligen Ventilausgang bzw. Anschlussstutzen oder Rohrstutzen, die Innenumfangswand des entsprechenden Gehäusesegments überragend, hervorsteht, und den radialen Ringspalt überbrückend mit einer Stirnseite an dem entsprechenden Trommelsegment dichtend anliegt. Der Einsatz berührt somit das Trommelsegment. Dies bewirkt, dass der Eintrittsbereich in den Ringspalt um die Zuführungsöffnung des Trommelsegments herum durch den Einsatz versperrt wird. Eine Leckage wird dadurch minimiert.

Die äußeren Abmessungen des Einsatzes können im Wesentlichen den inneren Abmessungen des Anschlussstutzens oder des Rohrstutzens entsprechen, so dass der Einsatz den Anschlussstutzen oder Rohrstutzens quasi abschnittsweise auskleidet. Vorzugsweise sind die äußeren Abmessungen des Einsatz etwas kleiner als die inneren Abmessungen des Anschlussstutzens oder des Rohrstutzens, gegebenenfalls wenige Zehntelmillimeter kleiner, so dass eine relative Beweglichkeit des Einsatz in axialer Richtung zum Trommelsegment hin möglich ist.

Eine relative Beweglichkeit des Einsatzes gegenüber dem Anschlussstutzen oder dem Rohrstutzen ermöglicht es optional, eine Axialkraft auf den Einsatz auszuüben, die den Einsatz in Richtung des Trommelsegments drückt. Diese Axialkraft kann beispielsweise die Rückstellkraft eines vorgespannten, insbesondere komprimierten Spannelements sein, das ebenfalls in dem Anschlussstutzen oder dem Rohrstutzen, in Richtung des Trommelsegments betrachtet, axial vor dem Einsatz angeordnet ist. Es kann also ein Spannelement vorgesehen sein, das den jeweiligen Einsatz in Richtung des entsprechenden Trommelsegments drückt, um somit eine dichtende Anlage zu gewährleisten. Das Spannelement kann beispielsweise ein elastischer Dichtring, eine Spiralfeder oder eine Wellenfeder sein.

Die Dicke des Einsatzes kann beispielsweise zwischen 0,5mm und 3mm betragen. Im Hinblick darauf, dass der Einsatz an der Trommel bzw. am Trommelsegment anliegt, kann der Einsatz aus einem Material mit guten Gleiteigenschaften bestehen, vorzugsweise tribologisch optimiert sein. Beispielsweise kann der Einsatz aus Polytetrafluorethylen (PTFE, Teflon) oder Polyetheretherketon (PEEK) hergestellt sein.

Der Querschnitt des Einsatzes ist vorzugsweise an den inneren Querschnitt des Anschlussstutzens oder des Rohrstutzens angepasst. Vorzugsweise ist der Querschnitt des Einsatzes kreisrund. Der Durchmesser oder maximale Außendurchmesser des Einsatzes ist kleiner als der Außendurchmesser des Trommelsegments. Die Stirnseite des Einsatzes beschreibt im Falle eines kreisrunden Durchmessers des Einsatzes geometrisch eine Raumkurve, wie sie beim Schnitt zweier Kreiszylinder mit senkrechten Achsen entsteht. Vorzugsweise ist auch die Stirnkante der Stirnseite an die Außenkontur des Trommelsegments angepasst, so dass sie bündig an dem Außenmantel des Trommelsegments anliegt.

Bedingt durch die Geometrie der genannten Raumkurve, die die Stirnseite des Einsatzes beschreibt, ist es von Vorteil, den Einsatz im 3D-Druck herzustellen.

Eine ideale Anwendung findet der Einsatz bei Rotationsventilen mit einem Außengehäuse aus Blech, bei dem auch der Anschlussstutzen oder der Rohrstutzen aus Blech sind, da in diesem Fall bei dem Anschlussstutzen oder dem Rohrstutzen glatte Innenwände vorliegen. Allerdings ist eine Anwendung auch bei gegossenen Außengehäusen möglich.

In einer anderen Ausführungsvariante kann zusätzlich oder alternativ zu dem Einsatz vorgesehen sein, dass innerhalb der Trommel und konzentrisch zu dieser ein stationärer hohler Innenzylinder angeordnet ist, der an einem Ende den Einlass für die Druckluft aufweist und das gegenüberliegende andere Ende geschlossen hat, und der mit den Ventilausgängen fluchtende Seitenöffnungen aufweist, um die Druckluft herauszulassen. Mit anderen Worten liegt die sich im Betrieb drehende Trommel zwischen dem Innenzylinder und dem Außengehäuse und gibt nur dann einen Strömungsweg vom Innenzylinder zu einem der Ventilausgänge frei, wenn auch seine entsprechende Zuführungsöffnung mit diesem Ventilausgang fluchtet. Mit dieser Anordnung wird für in den Ringspalt zwischen der Trommel und dem Außengehäuse entweichende Druckluft ein Labyrinth geschaffen, das den Strömungsweg zu dem oder den anderen Ventilausgängen verlängert, wodurch sich der Strömungswiderstand entlang dieses Weges von einem Ventilausgang durch das Rotationsventil hindurch zu einem anderen Ventilausgang erhöht und die Leckage insgesamt reduziert wird.

Weitere Merkmale, Vorteile, Eigenschaften und Wirkungen der Erfindung werden nachfolgend anhand von Ausführungsbeispielen und der beigefügten Figuren erläutert. Soweit vor- und nachstehend ein bestimmtes Merkmal in Verbindung mit einer bestimmten Ausführungsvariante beschrieben ist, sei hiermit klargestellt, dass dieses Merkmal auch Teil einer anderen beschriebenen Ausführungsvariante sein kann, jedenfalls sofern dies nicht ausdrücklich anders angegeben oder technisch ausgeschlossen ist.

Es sei darauf hingewiesen, dass im Rahmen der vorliegenden Beschreibung die Begriffe "aufweisen", "umfassen" oder "beinhalten" keinesfalls das Vorhandensein weiterer Merkmale ausschließen. Ferner schließt die Verwendung des unbestimmten Artikels bei einem Gegenstand nicht dessen Plural aus.

Es zeigen:
- Figur 1:: eine Aufbereitungsanlage für Abwasser mit zwei Wasserfiltrationseinheiten und zyklischer Druckluftversorgung mittels Rotationsventil
- Figur 2:: eine perspektivische Ansicht eines Rotationsventils nach der Erfindung mit zwei Ventilausgängen
- Figur 3:: eine perspektivische Ansicht eines Rotationsventils nach der Erfindung Technik mit drei Ventilausgängen
- Figur 4:: eine Darstellung eines erfindungsgemäßen Rotationsventils mit zwei Ventilausgängen im axialen Längsschnitt
- Figur 5:: eine perspektivische Ansicht eines erfindungsgemäßen Ventilsegments
- Figur 6:: eine Querschnittsdarstellung des erfindungsgemäßen Ventilsegments entlang der Längsachse
- Figur 7:: eine vereinfachte Längsschnittansicht eines ersten erfindungsgemäßen Rotationsventils mit drei Ventilausgängen und Zugstangen
- Figur 8:: eine vereinfachte Längsschnittansicht eines zweiten erfindungsgemäßen Rotationsventils mit drei Ventilausgängen und Montageflanschen
- Figur 9:: eine vereinfachte Längsschnittansicht eines dritten erfindungsgemäßen Rotationsventils mit drei Ventilausgängen, Montageflanschen und einteiliger Trommel
- Figur 10:: eine Prinzipdarstellung der Trommel und des Außengehäuses des Rotationsventils mit drei Ventilausgängen in einer Ansicht von unten ohne Übergangswinkelbereiche
- Figur 11:: eine Prinzipdarstellung der Trommel und des Außengehäuses des Rotationsventils mit drei Ventilausgängen in einer Ansicht von unten mit Übergangswinkelbereiche
- Figur 12:: eine Prinzipdarstellung eines erfindungsgemäßen Rotationsventils mit vier Ventilausgängen und einem Außengehäuse aus Blech, sowie eine Detailansicht [X] im Bereich eines Verbindungsrings zwischen zwei Gehäusesegmenten
- Figur 13:: eine Weiterbildung der Detailansicht [X] in Figur 12
- Figur 14:: ein Gehäusesegment aus Figur 12
- Figur 15:: eine Detaildarstellung eines erfindungsgemäßen Rotationsventils mit drei Ventilausgängen und einem Außengehäuse aus Blech
- Figur 16:: eine Detailansicht Y zu Figur 15 im Bereich eines Verbindungsrings zwischen zwei Gehäusesegmenten
- Figur 17:: ein rohrabschnittförmiger Einsatz zur Ringspaltabdichtung
- Figur 18:: eine zu Fig. 4 korrespondierende Darstellung eines Rotationsventils mit einem zusätzlichen Innenzylinder

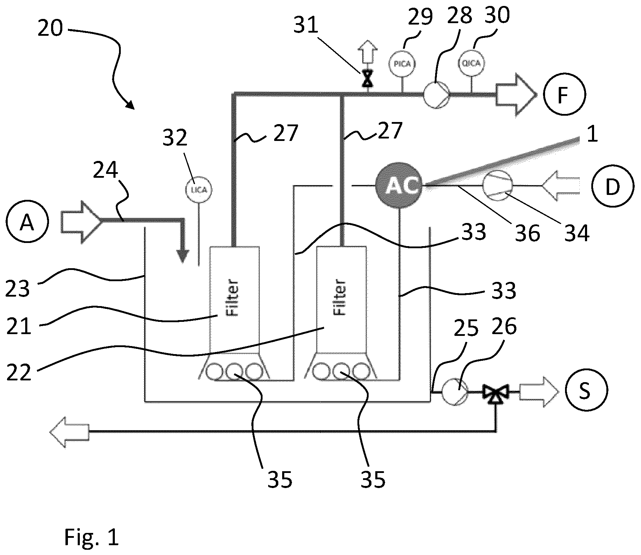

Figur 1 zeigt eine Funktionsansicht einer Wasseraufbereitungsanlage 20 mit beispielhaften zwei in einem Abwassertank 23 getauchten Wasserfiltrationseinheiten 21, 22. Über einen Zulauf 24 gelangt das Abwasser A in den Tank 23. Die Füllstandshöhe im Tank 23 wird mit einem Füllstandssensor 32 überwacht. Die Wasserfiltrationseinheiten 21 und 22 weisen semipermeable Membranen zur Mikro- oder Ultrafiltration des Abwassers A auf. Das durch diese Membranen hindurchwandernde Wasser F (Permeat/ Filtrat) wird über einzelne Permeatleitungen 27, die in eine gemeinsame Permeatleitung münden, abgeführt. **In** der gemeinsamen Permeatleitung ist eine Pumpe 28 angeordnet, die das gefilterte Wasser F nicht nur abtransportiert, sondern auch durch die semipermeable Membran hindurchsaugt. In der gemeinsamen Permeatleitung sind außerdem ein Drucksensor 29 und ein Volumenstromsensor 30 angeordnet. Ferner ist ein Probenventil 31 mit der Permeatleitung verbunden. Der Abwassertank 23 umfasst des Weiteren einen Ablauf 25, an den eine Ablaufleitung mit einer Pumpe 26 angeschlossen ist. Hierüber kann der Abwassertank geleert, das Abwasser zirkuliert oder sedimentierter Schlamm S am Beckenboden abtransportiert werden. Unterhalb der Wasserfiltrationseinheiten 21, 22 ist jeweils eine Belüftungseinheit 35 angeordnet, die über jeweils eine Druckleitung 33 mit Druckluft D versorgt werden. Die Druckluft D wird von einem Kompressor 34 erzeugt und über einer Druckluftleitung 36 einem Rotationsventil 1 zugeführt, welche die Druckluft D abwechselnd der einen und der anderen Druckleitung 33 zuführt. Die Druckluft D tritt aus den Belüftungseinheiten 35 in Form von Blasen heraus, die aufwärts durch die Wasserfiltrationseinheiten 21, 22 an der mit dem Abwasser beaufschlagten Seite der semipermeablen Membran entlang strömen und dort Feststoffe mitreißen, die sich infolge der Permeation des Wasser F durch die Membran festgesetzt haben. Die Druckluft dient insoweit der Reinigung der Membran.

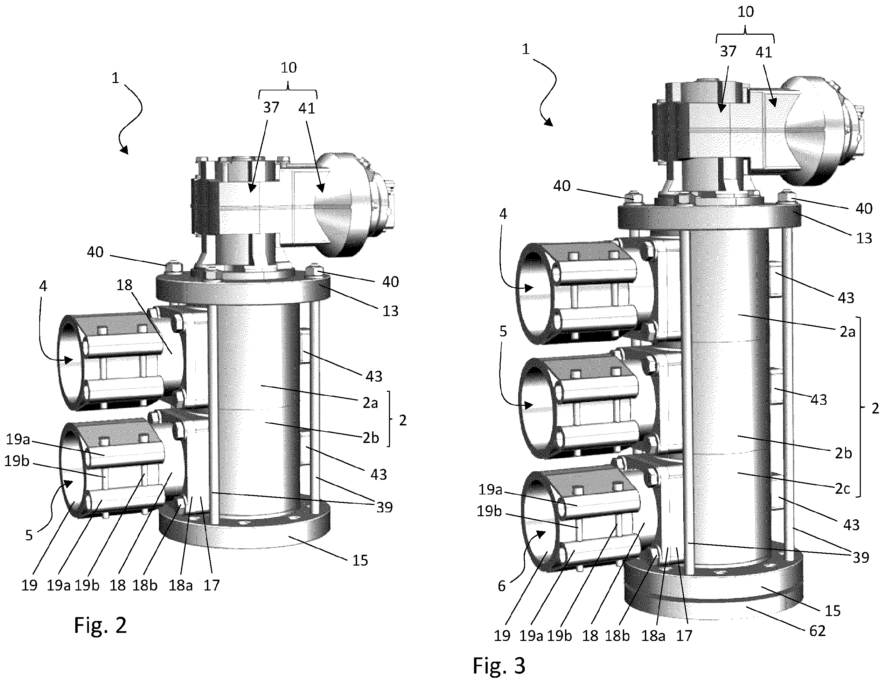

Figur 2 zeigt ein erfindungsgemäßes Rotationsventil 1, wie es bei der Wasseraufbereitungsanlage 20 in Figur 1 zum Einsatz gelangen kann. Das Rotationsventil 1 weist ein rohrförmiges Außengehäuse 2 mit einem ersten Ventilausgang 4 und einem axial dazu versetzten zweiten Ventilausgang 5 auf, die abwechselnd/ zyklisch mit Druckluft D beschickt werden und an die jeweils eine der Druckleitungen 33 in Figur 1 angeschlossen werden kann. Das Außengehäuse 2 erstreckt sich koaxial zur Längsachse 61 des Rotationsventils 1. Es ist in dieser Ausführungsvariante aus zwei axial gefügten Segmenten 2a, 2b derart zusammengesetzt, dass ein erstes Gehäusesegment 2a den ersten Ventilausgang 4 und ein zweites Gehäusesegment 2b den zweiten Ventilausgang 5 umfasst. Der erste Ventilausgang 4 und der zweite Ventilausgang 5 sind, bezogen auf die Ventilachse 61, in radialer Richtung fluchtend ausgerichtet, so dass sie direkt übereinander liegen und die anzuschließenden Druckleitungen 33 quasi parallel verlaufen.

Die Anordnung des Rotationsventils 1 ist hier vertikal, so dass die beiden Gehäusesegmente 2a, 2b des Außengehäuses 2 übereinander angeordnet sind. Die Gehäusesegmente 2a, 2b liegen mit jeweils einer axialen Stirnseite aneinander und mit der gegenüberliegenden axialen Stirnseite an einem oberen Gehäuseflansch 13 und einem unteren Gehäuseflansch 15 an, zwischen denen sie eingespannt sind. Hierzu dienen Zugstange 39, die einerends einen Kopf und anderenends ein Außengewinde aufweisen. Mit dem Kopf sind die Zugstangen 39 in dem in Figur 2 gezeigten Ausführungsbeispiel an dem unteren Gehäuseflansch 15 gehalten. Mit dem Gewinde ragen die Zugstange 39 jeweils durch Bohrungen im oberen Gehäuseflansch 13 hindurch und sind auf der den Gehäusesegmenten 2a, 2b abgewandten Seite des oberen Gehäuseflansches 13 über Muttern 40 am oberen Gehäuseflansch 13 festgeschraubt.

Das Rotationsventil 1 weist einen Aktor 10 umfassend einen elektromotorischen Antrieb 41 und ein Getriebe 37 auf, die eine Einheit bilden und ebenfalls auf der den Gehäusesegmenten 2a, 2b abgewandten Seite des oberen Gehäuseflansches 13 angeordnet sind.

Der erste und zweite Ventilausgang 4, 5 sind primär durch Öffnungen im Außengehäuse 2 gebildet. In der Ausführungsvariante gemäß Figur 2 umrahmen Anschlussstutzen 17, die hier einen quadratischen Querschnitt aufweisen, außenseitig besagte Öffnungen im Außengehäuse 2. An diesen Anschlussstutzen 17 ist jeweils ein Rohranschluss 18 befestigt, der hierzu einen Rohranschlussflansch 18a aufweist, der mittels Schrauben 18b gegen den Anschlussstutzen 17 geschraubt ist.

Die Rohranschlüsse 18 sind in Figur 2 von elastischen Manschetten 19 umgeben, die eine Kupplung zwischen den Rohranschlüssen 18 und den anzuschließenden Druckleitungen 33 bilden. Die Manschetten 19 sind profilartig ausgebildet, d.h. in ihrem Querschnitt entlang einer Achse, die sie umschließen, konstant. Sie sind im Querschnitt C-förmig und umgreifen den jeweiligen Rohranschluss 18 umfänglich. An ihren freien Umfangsenden ist jeweils ein hohlzylindrischer Befestigungsabschnitt 19a derart angeformt, dass sich die beiden Befestigungsabschnitte 19a beabstandet gegenüberliegen und parallel zueinander erstrecken. Jeder Befestigungsabschnitt 19a weist zwei Durchführungsöffnungen derart auf, dass sich jeweils zwei der Durchführungsöffnungen fluchtend gegenüber liegen. In diesen sich gegenüberliegenden Durchführungsöffnungen ist jeweils ein Zugbolzen 19b angeordnet. Die Zugbolzen 19b verbinden somit die Befestigungsabschnitte 19a miteinander unter Überbrückung des zwischen ihnen befindlichen Abstands. Mit Hilfe der Zugbolzen können die Befestigungsabschnitte 19a zueinander hin gezogen und damit die Manschette 19 um den Rohranschluss 18 gespannt werden.

Auf der den Ventilausgängen 4, 5 abgewandten Rückseite der Gehäusesegmente 2a, 2b weist jedes der Gehäusesegmente 2a, 2b eine Materialverdickung 43 mit einer planen Fläche und einer darin befindlichen Gewindebohrung 44 auf, die eine Befestigung des Rotationsventils 1 im Gesamtsystem am Ort seiner Aufstellung ermöglicht.

In Figur 3 ist ein weiteres erfindungsgemäßes Rotationsventil 1 dargestellt, das sich von der Ausführungsvariante in Figur 2 lediglich darin unterscheidet, dass das Außengehäuse 2 aus drei Gehäusesegmenten 2a, 2b, 2c gebildet ist. Es weist somit drei Ventilausgänge 4, 5, 6 auf. Des Weiteren ist in Figur 3 ein Flansch 62 der Druckluftleitung 36 zu sehen, über die die Druckluft in das Rotationsventil 1 gelangt.

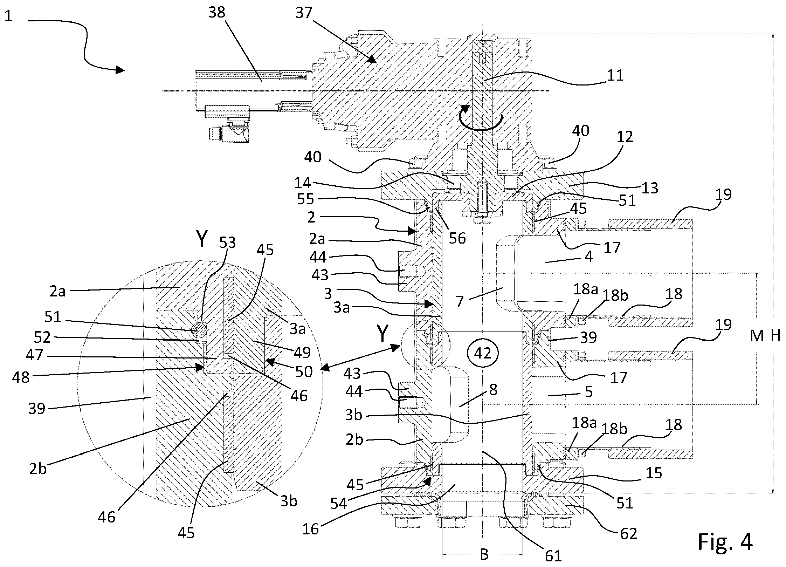

Figur 4 zeigt eine detailliertere Darstellung der Ausführungsvariante in Figur 2 mit zwei Ventilausgängen 4, 5 in einer Schnittansicht längs der Ventilachse 61, wobei hier auch der Flansch 62 der Druckluftleitung 36 gezeigt ist, über die die Druckluft D geliefert wird. Die Gesamthöhe H des Rotationsventils 1 beträgt in dieser Ausführungsvariante etwa H= 45,4 cm. Ferner beträgt der mittlere Abstand M zwischen dem ersten Ventilausgang 4 und dem zweiten Ventilausgang 5 hier M=13 cm.

Wie Figur 4 zu erkennen gibt, weist das Rotationsventil 1 eine drehbar im Außengehäuse 2 angeordnete Trommel 3 auf, die aus einem ersten Trommelsegment 3a und einem zweiten Trommelsegment 3b gebildet ist. Die Anzahl der Trommelsegmente 3a, 3b ist somit identisch der Anzahl der Gehäusesegmente 2a, 2b. Die Trommel- und Gehäusesegmente 2a, 2b, 3a, 3b haben im Wesentlichen dieselbe axiale Länge, so dass keines der Segmente gegenüber dem anderen vorspringt oder zurückversetzt ist. Die Kombination aus dem ersten Gehäusesegment 2a und dem ersten Trommelsegment 3a bildet ein erste Ventilsegment 1a und die Kombination aus dem zweiten Gehäusesegment 2b und dem zweiten Trommelsegment 3b bildet ein zweites Ventilsegment 1b. Die Gehäusesegmente 2a, 2b sind hinsichtlich ihrer Geometrie und Größe identisch. Gleiches gilt für die Trommelsegmente 3a, 3b.

Die Trommel 3 ist an einem axialen Ende offen, um dort aus einem Einlass 16 kommende Druckluft D in den Innenraum 42 aufzunehmen. Der Durchmesser B der Trommel 3 beträgt in diesem Beispiel B=8cm. Somit ist das Rotationsventil 1 für Rohrleitungen mit Nennweite DN80 bestimmt. In einer nicht dargestellten Ausführungsvariante kann das Rotationsventil 1 für Rohrleitungen mit Nennweite DN125 oder DN250 bestimmt sein.

Des Weiteren weist die Trommel 3 eine erste und eine zweite Zuführungsöffnung 7, 8 auf, durch die die Druckluft D aus der Trommel 3 strömen kann. Die Anzahl der Zuführungsöffnungen 7, 8 ist somit identisch zur Anzahl der Ventilausgänge 4, 5. Die Zuführungsöffnung 7, 8 liegen axial zu einander versetzt. Genauer betrachtet, weist das erste Trommelsegment 3a die erste Zuführungsöffnung 7 und das zweite Trommelsegment 3b die zweite Zuführungsöffnung 8 auf. Die beiden Zuführungsöffnung 7, 8 sind derart angeordnet, dass bei einer Drehung der Trommel 3 um die Längsachse 61 die erste Zuführungsöffnung 7 den ersten Ventilausgang 4 in einem ersten Winkelbereich ganz oder teilweise überlappt, um die Druckluft dem ersten Ventilausgang 4 zuzuführen, und in einem zweiten Winkelbereich nicht überlappt, und die zweite Zuführungsöffnung 8 den zweiten Ventilausgang 5 in dem ersten Winkelbereich nicht überlappt und in dem zweiten Winkelbereich ganz oder teilweise überlappt, um die Druckluft dem zweiten Ventilausgang 5 zuzuführen. Eine vollständige oder teilweise Überlappung einer Zuführungsöffnung 7, 8 mit einem Ventilausgang 4, 5 bedeutet, dass der entsprechende Ventilausgang 4, 5 geöffnet ist. Somit wird bei einer Drehung der Trommel 3 abwechselnd Druckluft D dem ersten und dem zweiten Ventilausgang 4, 5 zugeführt, wobei pro Umdrehung jeder Ventilausgang ein Mal geöffnet wird. Die Trommel 3 bildet somit das eigentliche Ventil des Rotationsventils 1.

Die Trommel 3 ist am oberen axialen Ende mit einer Trommelhalterung 12 drehfest verbunden, die wiederum an einer Antriebswelle 11 befestigt ist. Die Antriebswelle 11 liegt koaxial zur Ventilachse 61. Sie ragt aus dem Getriebe 37 hervor, von welchem sie angetrieben ist und erstreckt sich durch eine zentrale Öffnung 14 im oberen Gehäuseflansch 13 hindurch, um an die Trommelhalterung 12 anzuschließen. In Figur 4 ist der elektromotorische Antrieb 41 nicht dargestellt, jedoch die von diesem angetriebene Getriebewelle 38, die rechtwinklig zur Achse der Antriebswelle 11 liegt. Das Getriebe 37 wandelt somit im Betrieb die Drehbewegung der Getriebewelle 38 in eine Drehbewegung der Antriebswelle 11 um. Im Ergebnis wird die Trommel 3 vom Antrieb 41 über die Getriebewelle 38, die Antriebswelle 11 und die Trommelhalterung 12 gedreht.

Das Detailbild Y in Figur 4 zeigt eine Vergrößerung der Verbindung zwischen den Gehäusesegmenten 2a, 2b sowie zwischen den Trommelsegmenten 3a, 3b. Erkennbar besteht sowohl zwischen den Gehäusesegmenten 2a, 2b als auch zwischen den Trommelsegmenten 3a, 3b ein Formschluss, der durch die jeweiligen Stirnseiten gebildet ist. An den Stirnseiten sind außerdem einerseits die Gehäusesegmente 2a, 2b miteinander und andererseits die Trommelsegmenten 3a, 3b miteinander verpresst und damit kraftschlüssig aneinander gehalten.

Genauer betrachtet, weist das erste Gehäusesegment 2a an seinem zum zweiten Gehäusesegment 2b gerichteten Axialende einen ringförmigen axialen Vorsprung 47 auf, mit dem es in das benachbarte zweite Gehäusesegment 2b hineinragt. In gleicher Weise ist ein solcher ringförmiger axialer Vorsprung 47 bei dem zweiten Gehäusesegment 2b vorhanden, der allerdings in den unteren Gehäuseflansch 15 hineinragt. An dem dem ersten Gehäusesegment 2a zugewandten Axialende weist das zweite Gehäusesegment 2b einen ringförmigen axialen Rücksprung 48 auf, in den der axiale Vorsprung 47 des ersten Gehäusesegments 2a hineinragt. In entsprechender Weise ragt der axiale Vorsprung 47 des zweiten Gehäusesegments 2a in einen ringförmigen axialen Rücksprung des benachbarten unteren Gehäuseflanschs 15 hinein. Wie im Hauptbild der Figur 4 erkennbar ist, weist auch der obere Gehäuseflansch 13 einen ringförmigen axialen Vorsprung 55 auf, der sich in einen ringförmigen axialen Rücksprung 48 hineinerstreckt, welchen das erste Gehäusesegment 2a auf der dem oberen Gehäuseflansch 13 zugewandten Axialende aufweist.

Im Verbindungsbereich radial zwischen dem ersten und dem zweiten Gehäusesegment 2a, 2b ist ein Dichtungsring 51 angeordnet, der den Spalt zwischen den Gehäusesegmenten 2a, 2b nach außen abdichtet. Der Dichtungsring 51 liegt in einem Ringraum ein, der durch zwei axial zueinander beabstandete Stufen 52, 53 gebildet ist, nämlich eine erste Stufe 52, die eine Verbreiterung des Rücksprungs 48 radial nach außen bewirkt, und eine zweite Stufe 53, die eine Verbreiterung des Vorsprungs 47 radial nach außen bewirkt.

Der bei den Gehäusesegmenten 2a, 2b erläuterte Formschluss und Kraftschluss liegt auch bei den Trommelsegmenten 3a, 3b vor. So weist das erste Trommelsegment 3a an dem dem zweiten Trommelsegment 3b zugewandten, hier also unteren Axialende einen ringförmigen axialen Vorsprung 49 auf, mit dem es in das zweite Trommelsegment 3b hineinragt. In gleicher Weise weist auch das zweite Trommelsegment 3b einen ringförmigen axialen Vorsprung 49 auf, der jedoch in den unteren Gehäuseflansch 15 ragt. An dem dem ersten Trommelsegment 3a zugewandten, hier also oberen Axialende weist das zweite Trommelsegment 3b einen ringförmigen axialen Rücksprung 50 auf, in den der axiale Vorsprung 49 des ersten Trommelsegments 3a hineinragt. In entsprechender Weise ragt der axiale Vorsprung 49 des zweiten Trommelsegments 3a in einen ringförmigen axialen Rücksprung des benachbarten unteren Gehäuseflanschs 15 hinein. Wie im Hauptbild der Figur 4 erkennbar ist, weist auch die Trommelhalterung 12 einen ringförmigen axialen Vorsprung 56 auf, der sich in einen ringförmigen axialen Rücksprung 50 des ersten Trommelsegments 3a hineinerstreckt.

Die Ventilsegmente 1a, 1b weisen an beiden axialen Enden jeweils einen bandförmigen flachen Lagerring 45 auf, der zwischen dem Gehäusesegment 2a, 2b und dem Trommelsegment 3a, 3b des entsprechenden Ventilsegments 1a, 1b angeordnet ist. Wie das Detailbild Y zeigt, liegen die Lagerringe 45 jeweils formschlüssig in einer Ringnut 46, die in der Innenumfangsfläche des jeweiligen Gehäusesegments 2a, 2b ausgebildet ist. Die Lagerringe 45 stehen gegenüber der Innenumfangsfläche der Gehäusesegment 2a, 2b vor und überbrücken den Ringspalt zwischen Gehäusesegment 2a, 2b und Trommelsegment 3a, 3b, so dass sie mit ihrer radialen Innenumfangsfläche am Trommelsegment 3a, 3b anliegen und dieses radial lagern. Das Trommelsegment 3a, 3b gleitet somit während seiner Drehbewegung an der Innenumfangsfläche der Lagerringe 45 entlang.

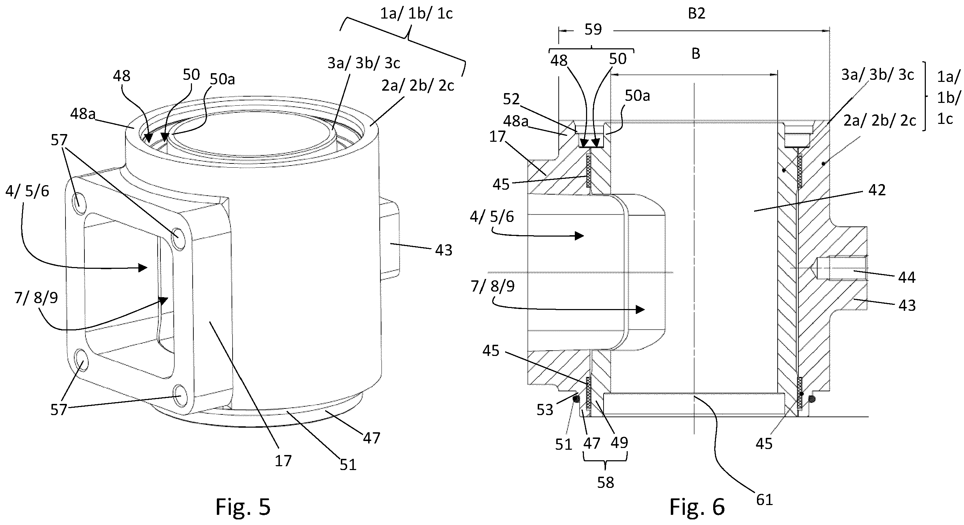

Figuren 5 und 6 zeigen ein einzelnes, aus einem Gehäusesegment 2a, 2b, 2c und einem Trommelsegment 3a, 3b, 3c gebildetes Ventilsegment 1a, 1b, 1c in einer perspektivischen Ansicht und in einer Querschnittsdarstellung entlang der Ventilachse 61. Zur Vermeidung von Wiederholungen wird auf die erläuternden Ausführungen zu Figuren 2 und 4 verwiesen, die auch auf die Figuren 5 und 6 zu lesen sind.

Figur 5 zeigt darüber hinaus, dass die quadratischen Anschlussstutzen 17 Gewindebohrungen 57 aufweisen, die in den Ecken angeordnet sind und zur Aufnahme der Schrauben 18b dienen.

Wie insbesondere Figur 6 veranschaulicht, aber auch schon Figur 4 erkennen lässt, liegen der ringförmige Vorsprung 47 eines Gehäusesegments 2a, 2b, 2c und der ringförmige Vorsprung 49 eines Trommelsegments 2a, 2b, 2c "Rücken an Rücken", so dass diese Vorsprünge 47, 49 quasi einen gemeinsamen großen Vorsprung 58 eines Ventilsegments 1a, 1b bilden. Gleiches gilt für den ringförmigen Vorsprung 55 des oberen Gehäuseflanschs 13 und den ringförmigen Vorsprung 56 der Trommelhalterung 12, siehe Figur 4. Auch diese bilden einen gemeinsamen großen Vorsprung. Erreicht wird der gemeinsame Vorsprung 58 dadurch, dass der ringförmige axiale Vorsprung 47 eines Gehäusesegments 2a, 2b radial innen an dessen Stirnkante angeformt ist und der ringförmige axiale Vorsprung 49 eines Trommelsegments 3a, 3b radial außen an dessen Stirnkante angeformt ist.

Analog zu dieser Betrachtung bilden die Rücksprünge 48, 50 an den gegenüberliegenden, hier oberen Stirnkanten der Ventilsegmente 1a, 1b eine gemeinsame große axiale Ringnut 59. Dies ist dadurch bedingt, dass die Rücksprünge 48, 50 in radialer Richtung zueinander gerichtet sind, so dass die Ringnut 59 in Richtung radial nach innen von einer Innenwand 50a und in Richtung radial nach außen von einer Außenwand 48a begrenzt wird. Die Innenwand 50a ist Teil des Trommelsegments 3a, 3b, 3c. Die Außenwand 48a ist Teil des Gehäusesegments 2a, 2b, 2c. Eine form- und funktionsgleiche axiale Ringnut 54 ist auch in dem unteren Gehäuseflansch 15 vorgesehen, um die Vorsprünge 47, 49 aufzunehmen.

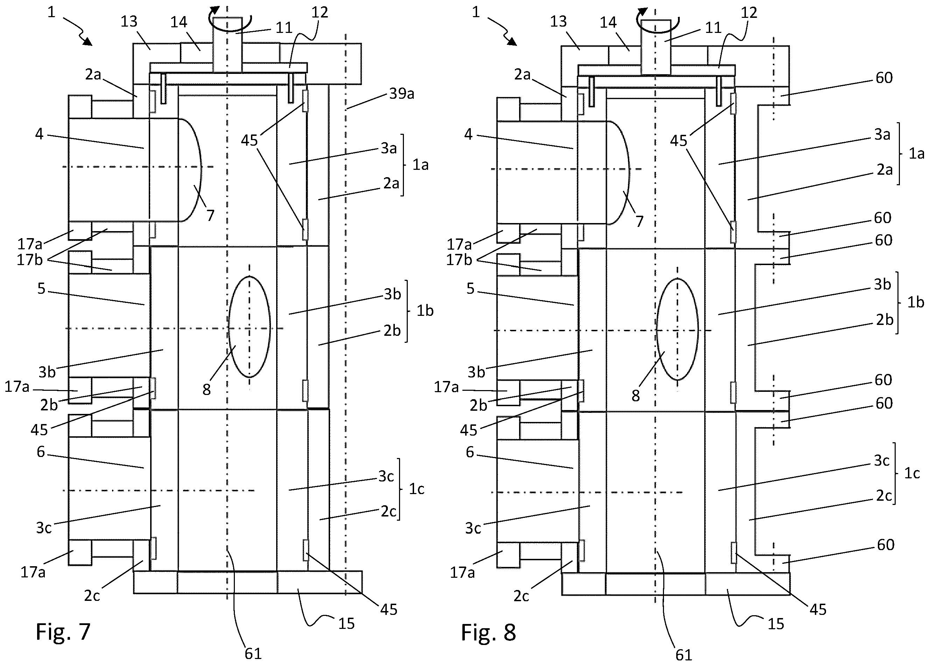

Figuren 7, 8 und 9 zeigen drei Ausführungsvarianten eines erfindungsgemäßen Rotationsventils 1 mit drei Ventilausgängen 4, 5, 6 in einer Schnittansicht entlang der Ventilachse 61, wobei die Variante in Figur 7 im Wesentlichen der in Figur 3 dargestellten Ausführungsvariante entspricht. Sie unterscheidet sich von der Variante in Figur 3 im Wesentlichen darin, dass anstelle der am Gehäusesegment 2a, 2b, 2c angeformten Anschlussstutzen 17 ein Rohrstutzen 17b an das jeweilige Gehäusesegment 2a, 2b, 2c angesetzt ist, in den der jeweilige Ventilausgang mündet. Der Rohrstutzen 17b weist an seinem dem Gehäusesegment 2a, 2b, 2c abgewandten freien Ende einen Flansch 17a aufweist, um die Druckleitung 33 anzuschließen bzw. zu befestigen.

Die Geometrie der Verbindungsstellen zwischen benachbarten Ventilsegmenten 1a, 1b, 1c bzw. zwischen dem ersten Ventilsegment 1a und der Trommelhalterung 12 und dem oberen Gehäuseflansch 13 sowie zwischen dem dritten Ventilsegment 1c und dem unteren Gehäuseflansch 15, d.h. die Vorsprünge 47, 49 und die Rücksprünge 48, 50, sind in den Figuren 7, 8, 9 zur Vereinfachung der Darstellung weggelassen. Auch sind die Trommelhalterung 12 samt dessen Verbindung zur Trommel 3 sowie der obere und untere Gehäuseflansch 13, 15 sowie deren Verbindung zum Außengehäuse 2 vereinfacht dargestellt. Die Achse 39a der Zugstangen 39 ist in Figur 7 angedeutet.

Figur 7 zeigt außerdem, dass nicht jedes Ventilsegment 1a, 1b, 1c zwei Lagerringe 45 aufweisen muss. In der Variante gemäß Figur 7 weist lediglich das oben angeordnete erste Ventilsegment 1a zwei Lagerringe 45 auf, wie in Figuren 5 und 6 dargestellt. Dagegen besitzen das in der Mitte angeordnete zweite Ventilsegment 1b und das unten angeordnete dritte Ventilsegment 1c nur einen einzigen Lagerring 45, der hier jeweils im Bereich des unteren axialen Endes des jeweiligen Ventilsegments 1b, 1c positioniert ist.

Anhand der Figuren 7, 8 und 9 wird außerdem die Anordnung der Zuführungsöffnungen 7, 8, 9 relativ zu einander deutlich. Diese sind symmetrisch über dem Umfang verteilt, d.h. derart angeordnet, dass ihre Mitten in Umfangsrichtung um 120° zueinander versetzt sind. Während nur der erste Ventilausgang 4 offen ist, d.h. die erste Zuführungsöffnung 7 im ersten Trommelsegment 3a derart ausgerichtet ist, dass sie zum ersten Ventilausgang 4 hin offen ist, liegen die zweite und dritte Zuführungsöffnung 8, 9 um 120° bzw. -120° versetzt zur ersten Zuführungsöffnung 7, so dass sie in der Darstellung der Figur 7 deckungsgleich sind.

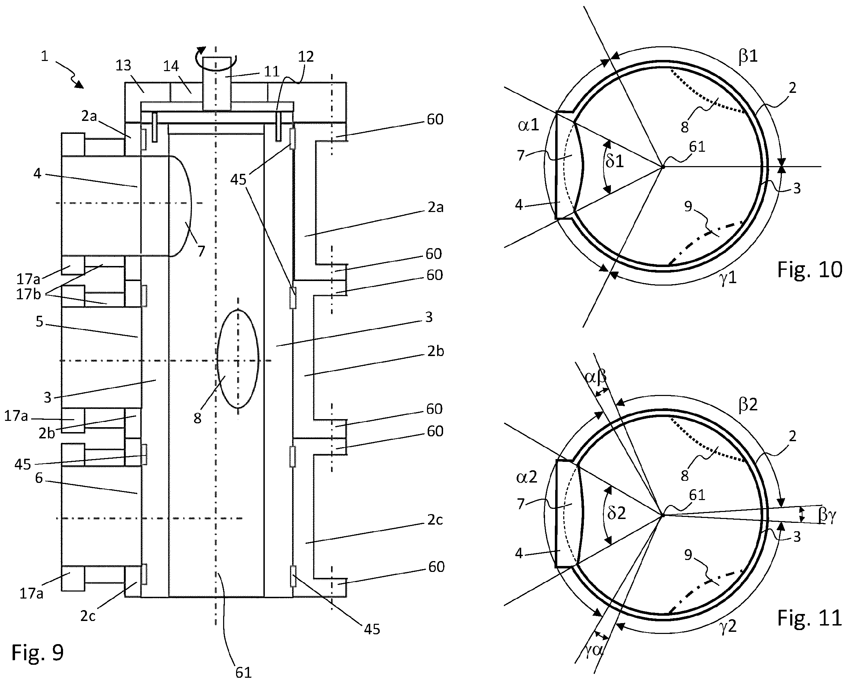

Figuren 10 und 11 veranschaulichen die Anordnung der Zuführungsöffnungen 7, 8, 9 in einer Ansicht von oben in die Trommel 3 hinein. Die Breite der Zuführungsöffnungen 7, 8, 9 in Umfangsrichtung ist durch den Öffnungswinkel δ1, δ2 gegeben. **In** Figur 1 ist der Öffnungswinkel δ1 derart, dass bei einer Drehung der Trommel 3 um die Längsachse 61
- die erste Zuführungsöffnung 4 den ersten Ventilausgang 7 in einem ersten Winkelbereich α1 ganz oder teilweise überlappt, um die Druckluft dem ersten Ventilausgang 4 zuzuführen, aber weder in einem zweiten Winkelbereich β1 noch in einem dritten Winkelbereich γ1 überlappt, und
- die zweite Zuführungsöffnung 5 den zweiten Ventilausgang 8 in dem zweiten Winkelbereich β1 ganz oder teilweise überlappt, um die Druckluft dem zweiten Ventilausgang 5 zuzuführen, aber weder in dem ersten Winkelbereich α1 noch in dem dritten Winkelbereich γ1 überlappt, und
- die dritte Zuführungsöffnung 6 den dritten Ventilausgang 9 in dem dritten Winkelbereich y1 ganz oder teilweise überlappt, um die Druckluft dem dritten Ventilausgang 6 zuzuführen, aber weder in dem ersten Winkelbereich α1 noch in dem zweiten Winkelbereich β1 überlappt.

Die Winkelbereiche sind als Umfangsabschnitte zu verstehen. Der erste, zweite und dritte Winkelbereich α1, β1, γ1 sind hier beispielhaft 120°. Somit öffnet unmittelbar nach dem Schließen eines Ventilausgangs 4, 5, 6 ein anderer Ventilausgang 4, 5, 6 und zwar zyklisch nacheinander.

Theoretisch könnte der Öffnungswinkel δ1 auch kleiner als in Figur 10 gewählt sein. In diesem Fall liegen zwischen dem ersten, zweiten und dritten Winkelbereich jedoch solche Übergangswinkelbereiche, in denen kein Ventilausgang 4, 5, 6 geöffnet ist. In den Zeiträumen, in denen die Trommel 3 in diesen Übergangswinkelbereichen verweilt, wird aufgrund der kontinuierlichen Druckluftzuführung ein hoher Druck im Innenraum 42 der Trommel 3 aufgebaut, der die mechanischen Schnittstellen zwischen den Bauteilen des Rotationsventils 1 belastet. Dieser Druck pulsiert pro Umdrehung mit einer der Anzahl der Zuführungsöffnungen entsprechenden Frequenz. Die Druckpulsation ist dadurch bedingt, dass der effektive Strömungsquerschnitt für die Druckluft schwankt. Er ist maximal, wenn eine Zuführungsöffnung 7, 8, 9 mit einem Ventilausgang 4, 5, 6 fluchtet. Vor diesem Zeitpunkt oder Zeitraum steigt er an oder fällt er ab, weil die Zuführungsöffnung 7, 8, 9 den Ventilausgang 4, 5, 6 nur zunehmend oder abnehmend überlappt.

Um die Druckpulsation im Innenraum 42 der Trommel 3 zu reduzieren, ist es sinnvoll, wenn zwischen dem ersten, zweiten und dritten Winkelbereich solche Übergangswinkelbereiche vorgesehen sind, in denen jeweils zwei Ventilausgänge [4, 5], [5, 6], [6, 4] gleichzeitig geöffnet sind. Dies ist in Figur 11 veranschaulicht. Der Öffnungswinkel δ2 ist hier größer als in der Variante gemäß Figur 10. Dies bewirkt, dass, wenn eine der Zuführungsöffnungen 7, 8, 9 den Bereich eines Ventilausgangs 4, 5, 6 verlässt aber noch immer partiell überlappt, so dass dieser Ventilausgangs 4 noch offen ist, eine andere Zuführungsöffnung 7, 8, 9 bereits einen anderen Ventilausgangs 4, 5, 6 öffnet, d.h. mit diesem partiell überlappt. Dies ist in dem Übergangswinkelbereich αβ zwischen dem ersten Winkelbereich α2 und dem zweiten Winkelbereich β2, in dem Übergangswinkelbereich βγ zwischen dem zweiten Winkelbereich β2 und dem dritten Winkelbereich γ2 sowie in dem Übergangswinkelbereich γα zwischen dem dritten Winkelbereich γ2 und dem ersten Winkelbereich α2 der Fall. Die genannten Winkelbereiche und Übergangswinkelbereich ergänzen sich zu 360°.

Die vorstehende Erläuterung der Übergangswinkelbereiche bei drei Zuführungsöffnungen bzw. drei Ventilausgängen lässt sich analog auf Ausführungsvarianten mit zwei, vier oder mehr Zuführungsöffnungen bzw. Ventilausgängen übertragen.

Die Ausführungsvariante in Figur 8 unterscheidet sich von der Variante in Figur 7 darin, dass die Gehäusesegmente 2a, 2b, 2c an ihren beiden axialen Stirnseiten jeweils einen radial nach außen gerichteten Montageflansch 60 aufweisen, mit dem die Gehäusesegmente 2a, 2b, 2c miteinander oder mit einem der Gehäuseflansche 13, 15 befestigt werden können. Auf die Zugstangen 39 kann in diesem Fall verzichtet werden. Die Montageflansche 60 dienen außerdem der Zentrierung und - hier- axialen Lagerung.

Die Ausführungsvariante in Figur 9 entspricht im Wesentlichen der Variante in Figur 8. Sie unterscheidet sich von der Variante in Figur 8 lediglich darin, dass die Trommel 3 nicht segmentiert ist.

Die bestimmungsgemäße Anordnung des Rotationsventils 1 ist in den dargestellten Ausführungsvarianten stehend, so dass die Längsachse 61 vertikal ist. Jedoch ist auch eine Anordnung mit horizontaler Längsachse möglich. Die zur Beschreibung verwendeten Begriffe "oben" und "unten" sind dann sinngemäß durch "rechts" und "links" zu ersetzen.

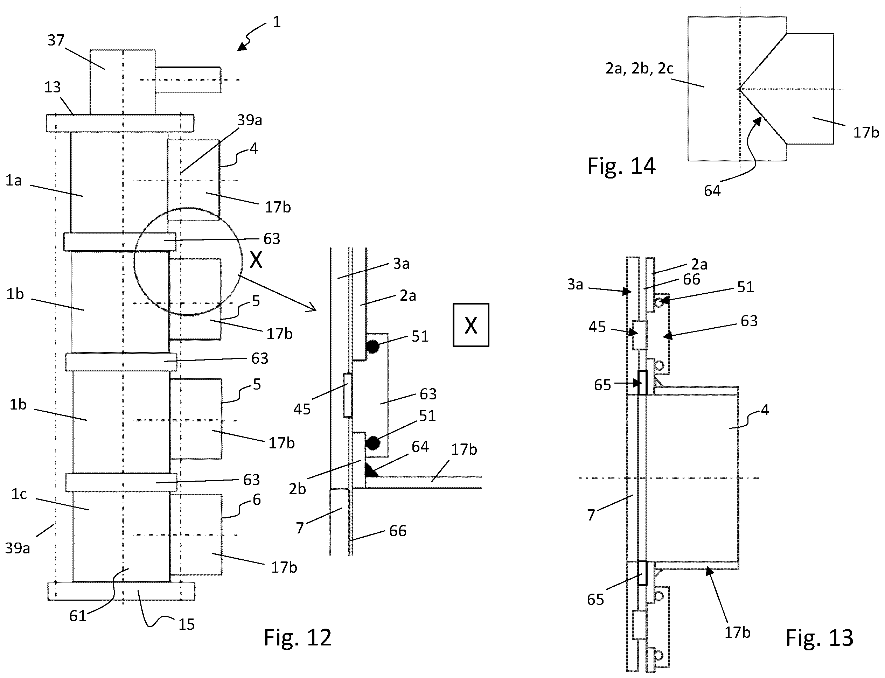

Während in den zuvor beschriebenen Ausführungsvarianten das Außengehäuse 2 ein Gussteil ist, zeigen Figuren 12 bis 14 eine Ausführungsvariante des Rotationsventils 1 mit einem Außengehäuse 3, dessen Gehäusesegmente 2a, 2b, 2c, aus Blech hergestellt sind. Die Wandstärke der Gehäusesegmente 2a, 2b, 2c ist somit vergleichsweise dünn, wie die in Figur 13 gezeigte Detaildarstellung X aus Figur 12 veranschaulicht. Die Ausführungsvariante in Figur 12 weist außerdem vier Ventilsegmente 1a, 1b, 1b (zwei zweite Ventilsegmente in der Mitte) und somit vier Ventilausgängen 4, 5, 6 auf. Die Ventilsegmente 1a, 1b, 1b sind auch hier zwischen einem oberen Gehäuseflansch 13 und einem unteren Gehäuseflansch 15 angeordnet und mittels Zugstangen 39, von denen nur die Achsen 39a angedeutet sind, zwischen den Gehäuseflanschen 13, 15 eingespannt. Verbindungsringe 63 verbinden benachbarte Gehäusesegmente 2a, 2b, 2c miteinander.

Die Ventilausgänge 4, 5, 6 sind in dieser Ausführungsvariante ebenfalls durch Rohrstutzen 17b, d.h. ohne Flansch ausgebildet. Sie sind mit ihrer Achse rechtwinklig zur Ventilachse 61 an das jeweilige Gehäusesegment 2a, 2b, 2b angesetzt. Figur 14 zeigt, dass die Rohrstutzen 17b, die ebenfalls aus Blech bestehen, an das jeweilige Gehäusesegment 2a, 2b, 2c unter Bildung einer außenseitigen Schweißnaht 64 angeschweißt ist.

Bei der Ausführungsvariante in Figuren 12 bis 14 ist besonders, dass aufgrund der geringen Wandstärke der Gehäusesegmente 2a, 2b, 2c eine andere Verbindung zwischen benachbarten Gehäusesegmenten 2a, 2b, 2c erforderlich ist. Hierzu sind die genannten Verbindungsringe 63 vorgesehen. Ein solcher Verbindungsring 63 ist im Querschnitt in der Detailansicht [X] zu Figur 12 gezeigt. Er ist annähend T-förmig , so dass er einerseits mit einem mittleren Abschnitt zwischen den zueinander gerichteten axialen Stirnseiten der benachbarten Gehäusesegmente 2a, 2b angeordnet ist und an diesen Stirnseiten anliegt und andererseits jedes der beiden Gehäusesegmenten 2a, 2b mit je einem vom mittleren Abschnitt axial vorstehenden Rahmen an deren Rand außenumfänglich umgreift, wie die Vergrößerung [X] in Figur 12 zeigt.

Des Weiteren trägt der Verbindungsring 63 an jedem der beiden Rahmen einen Dichtringe 51, die am Außenumfang des jeweiligen Gehäusesegments 2a, 2b anliegen und somit den Radialspalt zwischen Gehäusesegment 2a, 2b und Verbindungsring 63 abdichten.

Zwischen dem Verbindungsring 63 und dem Trommelsegment 3a ist außerdem ein kreiszylindrischer Lagerring 45 zur radialen Lagerung des Trommelsegments 3a angeordnet, der formschlüssig in einer Ringnut am Außenumfang des Trommelsegments 3a einliegt. Der Lagerring 45 wirkt hier ebenfalls als Dichtung. Gleichwohl kann es sein, dass, wenn ein Ventilausgang 4, 5, 6 des Rotationsventils 1 geöffnet ist, Druckluft infolge des Drucks in diesem Ventilausgang 4, 5, 6 von diesem Ventilausgang 4, 5, 6 über den Lagerring 45 hinweg in den radialen Ringspalt 66 zwischen der Trommel 3 und dem Außengehäuse 2 und durch das Rotationsventil 1 hindurch zu einem anderen Ventilausgang strömt, wo es dann entweicht. Um diese innere Leckage der Druckluft zu reduzieren, können unterschiedliche Maßnahmen ergriffen werden, wie nachfolgend beschrieben.

Figur 13 zeigt eine Weiterbildung der Variante in der Detailansicht [X] von Figur 12, bei der zusätzlich eine zylindrische Ringdichtung 65 im Ringspalt 66 axial zwischen dem Lagerring 45 und dem Ventilausgang 4 angeordnet ist. Eine solche Ringdichtung 65 ist sowohl oberhalb als auch unterhalb des Ventilausgangs 4 vorhanden, um den jeweiligen Eintrittsbereich in den Ringspalt 66 aus Richtung des Ventilausgangs 4 abzudichten.

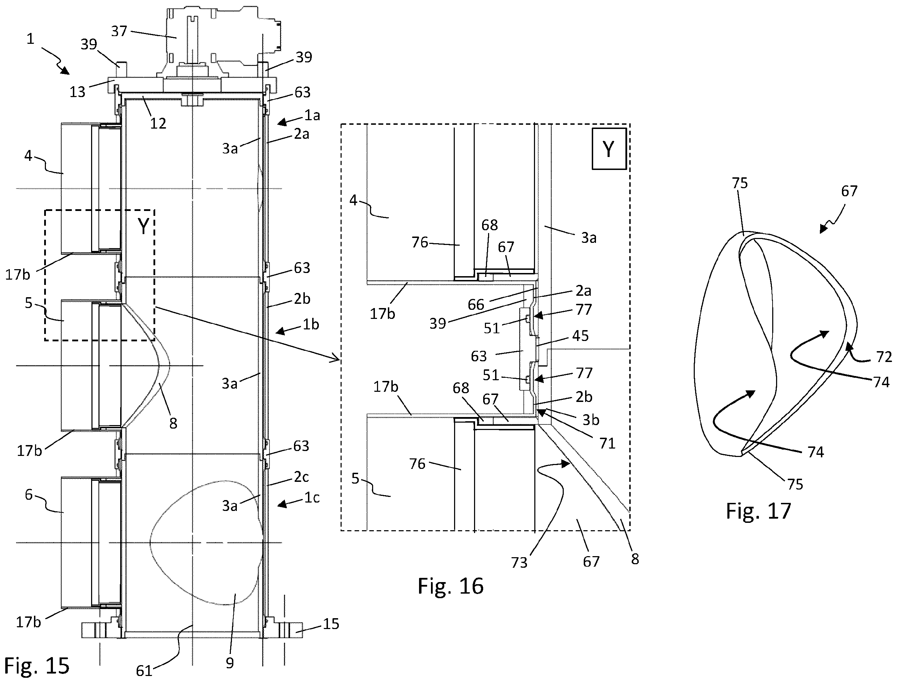

Figuren 15 und 16 veranschaulichen eine Ausführungsvariante eines erfindungsgemäßen Rotationsventils 1 mit einem Außengehäuse 2, das aus Gehäusesegmenten 2a, 2b, 2c aus Blech gebildet ist. Figur 16 zeigt eine Detailansicht [Y] des Ausschnitts Y in Figur 15. Bei dieser Ausführungsvariante ist innerhalb der Rohrstutzen 17b eines jeden Ventilsegments ein Einsatz in Form eines Rohrabschnitts 67 eingesetzt ist. Figur 16 veranschaulicht dies am ersten und zweiten Ventilsegment 1a, 1b, wobei eine identische Anordnungen beim dritten Ventilsegment 1c vorhanden ist.

Der Einsatz 67 steht aus dem jeweiligen Rohrstutzen 17b, die Innenumfangswand 71 des entsprechenden Gehäusesegments 2a, 2b des Ventilsegments 1a, 1b überragend, hervor, und liegt, den Ringspalt 66 überbrückend, mit einer Stirnseite 72 an dem Außenumfang 73 des entsprechenden Trommelsegments 3a, 3b des Ventilsegments 1a, 1b dichtend an. Der Einsatz 67 berührt somit das Trommelsegment 3a, 3b. Dies bewirkt, dass der Eintrittsbereich in den Ringspalt 66 durch den Einsatz versperrt wird. Die innere Leckage wird dadurch minimiert.

Der Einsatz 67 ist in Figur 17 als einzelnes Bauteil gezeigt. Er ist rohrabschnittförmig und besitzt eine kreisrunde Grundform. Die Stirnseite 72 des Einsatzes 69 beschreibt geometrisch eine Raumkurve, wie sie beim Schnitt zweier Kreiszylinder (Einsatz und Trommelsegment) mit senkrecht zu einander stehenden Längsachsen, genauer gesagt einem Kreiszylinder mit größerem Durchmesser (Trommelsegment) und einem Kreiszylinder mit demgegenüber kleinerem Durchmesser (Einsatz) entsteht. Demensprechend ist der Einsatz 67 spiegelsymmetrisch und weist zwei gegenüberliegende, in axialer Richtung jeweils eine Parabel beschreibende Seitenwangen 74 auf, die bogenförmig unter stetiger Verringerung der axialen Länge des Einsatzes 67 in einen gemeinsamen Verbindungsabschnitt 75 übergehen. Mit anderen Worten hat der Einsatz 67 in der Die Seitenwangen 74 und die Verbindungsabschnitte 75 bilden also jeweils Umfangsabschnitte des Einsatzes 67, wobei die Länge des Einsatzes 67 in axialer Richtung in der Mitte der Verbindungsabschnitte 75 in Umfangsrichtung betrachtet am geringsten ist und die Länge des Einsatzes 67 in axialer Richtung in der Mitte der Seitenwangen 74 in Umfangsrichtung betrachtet am größten ist.

Wie Figur 17 zu erkennen gibt, ist auch die Stirnkante der Stirnseite 72 an die Außenkontur des Trommelsegments 3a, 3b angepasst, so dass sie bündig an dem Außenmantel des Trommelsegments 3a, 3b anliegt. Mit anderen Worten liegt die Stirnkante der Stirnseite 72 im Bereich der Mitte der Verbindungsabschnitte 75 in einer Radialebene senkrecht zur Längsachse, wohingegen die Stirnkante der Stirnseite 72 ausgehend von dieser Mitte in Richtung der Mitte der Seitenwangen 74 zunehmend nach innen in Richtung der Längsachse abfällt, so dass sie in der Mitte der Seitenwangen 74 am stärksten nach innen gekippt ist.

Die Dicke des Einsatzes 67 kann beispielsweise zwischen 0,5mm und 3mm betragen. Der Außendurchmesser des Einsatzes 67 ist um wenige Zehntelmillimeter kleiner, als der Innendurchmesser des Rohrstutzens 17b, so dass eine Relativbewegung des Einsatz 67 zum Rohrstutzen 17b in Richtung des Trommelsegments 3a, 3b hin möglich ist. Hierzu ist in dem Rohrstutzen 17b ein Spannelement 68 axial vor dem Einsatz 67 angeordnet, das eine axiale Kraft auf den Einsatz 67 in Richtung des Trommelsegments 3a, 3b ausübt. Das Spannelement 68 ist in den Figuren 15 und 16 ein elastischer Dichtring. Es kann in einer anderen Ausführungsvariante als Spiralfeder oder Wellenfeder ausgebildet sein. Das Spannelement 68 drückt somit den Einsatz 67 in Richtung des Trommelsegments. Im montierten Zustand ist das Spannelement komprimiert, so dass die axiale Kraft eine Rückstellkraft des Spannelements 68 ist, mit der es in seinen spannungsfreien Zustand strebt.

Axial positioniert in dem jeweiligen Rohrstutzen 17b sind das Spannelement 68 und der Einsatz 67 mit Hilfe eines gestuften Rohres 76, das stufenartig von einem ersten Durchmesser, den das Rohr in einem ersten Abschnitt aufweist, zu einem hierzu größeren zweiten Durchmesser übergeht, den das Rohr in einem zweiten Abschnitt aufweist. Das gestufte Rohres 76 ist mit dem zweiten Abschnitt in dem Rohrstutzen 17b kraftschlüssig gehalten und bildet quasi einen Blechkäfig. Durch den geringeren Durchmesser des ersten Abschnitts ist zwischen dem gestuften Rohr und der Innenwand des Rohstutzens 17b im Bereich des ersten Abschnitts ein zum Trommelsegment 3a, 3b hin offener Ringraum gebildet, in dem das Spannelement 68 und der Einsatz 67 einliegen, wobei sich das Spannelement 68 an dem stufenartigen Übergang des gestuften Rohres 76 vom ersten zum zweiten Durchmesser/ Abschnitt abstützt. Die axiale Position des gestuften Rohres 76 in dem Rohrstutzen 17b ist so gewählt, dass der Abstand zwischen dem stufenartigen Übergang und dem Trommelsegment 3a, 3b geringer ist, als die gemeinsame axiale Länge des Spannrings in seinem entspannten Zustand und des Einsatzes 67. Das bedeutet, dass das Spannelement 68 in seinem in den Ringraum eingesetzten Zustand gestaucht ist, wenn der Einsatz 67 zwischen ihm und dem Trommelsegment 3a, 3b liegt.

Mit Blick auf Figur 16 sei noch erwähnt, dass die aus Blech hergestellten Gehäusesegmente 2a, 2b des Außengehäuses 2 an ihren zueinander gerichteten Endabschnitten, nach außen gestellte Bereiche 77 aufweisen, mit denen die Endabschnitte jeweils in einen Verbindungsring 63 eingesteckt sind. Die nach außen gestellten Bereiche 77 haben eine Federwirkung, so dass die Gehäusesegmente 2a, 2b durch sie kraftschlüssig in den Verbindungsringen 63 gehalten sind.

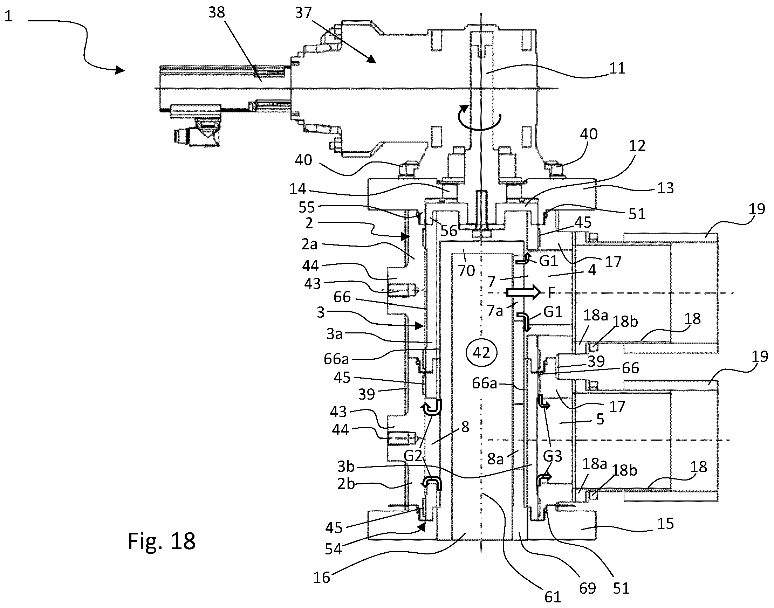

Figur 18 zeigt eine weitere Maßnahme zur Reduzierung von Leckageverlusten. In dieser Ausführungsvariante ist vorgesehen, dass innerhalb der Trommel 3 bzw. 3a, 3b und konzentrisch zu dieser ein stationärer hohler Innenzylinder 69 angeordnet ist, der an einem Ende den Einlass 16 für die Druckluft aufweist und das gegenüberliegende andere Ende durch einen Deckel 70 geschlossen hat. Der Innenzylinder 69 weist ferner mit den Ventilausgängen 4, 5 fluchtende Seitenöffnungen 7a, 8a auf, um die Druckluft herauszulassen. Mit anderen Worten liegt die sich im Betrieb drehende Trommel 3 mit ihren Segmenten 3a, 3b zwischen dem Innenzylinder 69 und dem Außengehäuse 2 bzw. dessen Gehäusesegmenten 2a, 2b und gibt nur dann einen Strömungsweg vom Innenzylinder 69 zu einem der Ventilausgänge 4, 5 frei, wenn auch seine entsprechende Zuführungsöffnung 7, 8 mit diesem Ventilausgang 4, 5 fluchtet.

Mit dieser Anordnung wird für in den Ringspalt 66 zwischen der Trommel 3 und dem Außengehäuse 2 entweichende Druckluft ein Labyrinth geschaffen, das den Strömungsweg zu dem oder den anderen Ventilausgängen 5 verlängert, wodurch sich der Strömungswiderstand entlang dieses Weges von einem Ventilausgang 4, 5 durch das Rotationsventil 1 hindurch zu einem anderen Ventilausgang 5, 4 erhöht und die Leckage insgesamt reduziert wird.

In Figur 18 sind die Strömungswege durch Pfeile angedeutet. Erkennbar fluchten in dem in Figur 18 gezeigten Zustand des Rotationsventils 1 die Seitenöffnung 7a des Innenzylinders 69, die Zuführungsöffnung 7 des ersten Trommelsegments 3a und der erste Ventilausgang 4 miteinander, so dass ein Hauptströmungsweg frei ist, der durch den Pfeil F veranschaulicht ist. Zwischen dem Innenzylinder 69 und der Trommel 3 bzw. den Trommelsegmenten 3a, 3b besteht ein innerer Ringspalt 66a, der im Vergleich zu dem äußeren Ringspalt 66 zwischen Trommel 3 und Außengehäuse 2 bzw. zwischen Trommelsegmenten 3a, 3b und Gehäusesegmenten 2a, 2b eine größere radiale Breite hat.

Pfeile G1 veranschaulichen einen Strömungsweg, entlang dem Druckluft, die aus dem Innenzylinder 69 austritt, in den inneren Ringspalt 66a strömen kann. Der innere Ringspalt 66a erstreckt sich im Wesentlichen entlang der gesamten axialen Länge des Innenzylinders 69 und um den Innenzylinder 69 herum. Pfeile G2 veranschaulichen den Strömungsweg weiter, wonach die Druckluft aus dem inneren Ringspalt 66a dort austreten kann, wo die zweite Zuführungsöffnung 8 liegt. Durch diese zweite Zuführungsöffnung 8 hindurchströmend kann die Druckluft über die Lagerringe 45 in den äußeren Ringspalt 66 eindringen. Der äußeren Ringspalt 66 erstreckt sich im Wesentlichen entlang der gesamten axialen Länge der Trommel 3 und um die Trommel 3 bzw. dessen Segmente 3a, 3b herum. Pfeile G3 veranschaulichen den Strömungsweg noch weiter, entlang dem die Druckluft dann aus dem äußeren Ringraum 66 in den zweiten Ventilausgang 5 entweicht. Der Strömungsweg erstreckt sich somit entlang eines Labyrinths, das den Strömungsweg gegenüber einer Ausführungsvariante ohne den Innenzylinder 69, wie in Figur 4 gezeigt, verlängert, dadurch den Strömungswiderstand erhöht und dadurch wiederum die Leckage an Druckluft reduziert.

In einer nicht dargestellten Ausführungsvariante können die Ventilausgänge 4, 5, 6 je eine Rücklaufsperre, beispielsweise in der Art einer schwenkbaren Rückschlagklappe, aufweisen, die den entsprechenden Ventilausgang 4, 5, 6, verschließt und durch die Druckluft öffnet, um zu verhindern, dass Abwasser über die Ventilausgänge in das Rotationsventil, gegebenenfalls von dort auch in den die Druckluft bereitstellenden Kompressor und darüber hinaus in die Umwelt gelangen kann. Die Rücklaufsperre kann ein separates Bauteil sein, das beispielsweise an den Anschlussstutzen 17 oder Flansch 17a eines Gehäusesegments 2a, 2b, 2c oder an den sich daran anschließenden Rohranschluss 18 angeschlossen sein. Alternativ kann die Rücklaufsperre in den Anschlussstutzen17 oder den Rohranschluss 18 integriert sein.

Es sei darauf hingewiesen, dass die vorstehende Beschreibung lediglich beispielhaft zum Zwecke der Veranschaulichung gegeben ist und den Schutzbereich der Erfindung keineswegs einschränkt. Merkmale der Erfindung, die als "kann", "beispielhaft", "bevorzugt", "optional", "ideal", "vorteilhaft", "gegebenenfalls" oder "geeignet" angegeben sind, sind als rein fakultativ zu betrachten und schränken ebenfalls den Schutzbereich nicht ein, welcher ausschließlich durch die Ansprüche festgelegt ist. Soweit in der vorstehenden Beschreibung Elemente, Komponenten, Verfahrensschritte, Werte oder Informationen genannt sind, die bekannte, naheliegende oder vorhersehbare Äquivalente besitzen, werden diese Äquivalente von der Erfindung mit umfasst. Ebenso schließt die Erfindung jegliche Änderungen, Abwandlungen oder Modifikationen von Ausführungsbeispielen ein, die den Austausch, die Hinzunahme, die Änderung oder das Weglassen von Elementen, Komponenten, Verfahrensschritte, Werten oder Informationen zum Gegenstand haben, solange der erfindungsgemäße Grundgedanke erhalten bleibt, ungeachtet dessen, ob die Änderung, Abwandlung oder Modifikationen zu einer Verbesserung oder Verschlechterung einer Ausführungsform führt.

Obgleich die vorstehende Erfindungsbeschreibung eine Vielzahl körperlicher, unkörperlicher oder verfahrensgegenständlicher Merkmale in Bezug zu einem oder mehreren konkreten Ausführungsbeispiel(en) nennt, so können diese Merkmale auch isoliert von dem konkreten Ausführungsbeispiel verwendet werden, jedenfalls soweit sie nicht das zwingende Vorhandensein weiterer Merkmale erfordern. Umgekehrt können diese in Bezug zu einem oder mehreren konkreten Ausführungsbeispiel(en) genannten Merkmale beliebig miteinander sowie mit weiteren offenbarten oder nicht offenbarten Merkmalen von gezeigten oder nicht gezeigten Ausführungsbeispielen kombiniert werden, jedenfalls soweit sich die Merkmale nicht gegenseitig ausschließen oder zu technischen Unvereinbarkeiten führen.

### Bezugszeichenliste

1 Rotationsventil
1a, 1b, 1c Ventilsegment
2 Außengehäuse
2a erstes Gehäusesegment
2b zweites Gehäusesegment
2c drittes Gehäusesegment
3 Trommel
3a erstes Trommelsegment
3b zweites Trommelsegment
3c drittes Trommelsegment
4 erster Ventilausgang
5 zweiter Ventilausgang
6 dritter Ventilausgang
7 erste Zuführungsöffnung
7a erste Seitenöffnung des Innenzylinders
8 zweite Zuführungsöffnung
8a zweite Seitenöffnung des Innenzylinders
9 dritte Zuführungsöffnung
10 Aktor
11 Antriebswelle
12 Trommelhalterung
13 Oberer Gehäuseflansch
14 Zentrale Öffnung
15 unterer Gehäuseflansch
16 Einlass für Druckluft
17 Anschlussstutzen
17a Flansch
17b Rohrstutzen
18 Rohranschluss
18a Anschlussflansch
18b Schrauben
19 Manschette
19a Befestigungsabschnitt
19b Zugbolzen
20 Wasseraufbereitungsanlage
21 erste Filtrationseinheit
22 zweite Filtrationseinheit
23 Abwassertank
24 Zulauf
25 Ablauf
26 Pumpe
27 Permeatleitung
28 Pumpe
29 Drucksensor
30 Volumenstromsensor
31 Probenventil
32 Füllstandssensor
33 Druckleitung
34 Kompressor
35 Belüftungseinheit
36 Druckluftleitung
37 Getriebe
38 Getriebewelle
39 Zugstange
39a Achse der Zugstange
40 Mutter
41 Antrieb
42 Trommelinnenraum
43 Materialverdickung
44 Gewindebohrung
45 Lagerring
46 Ringnut an radialer Innenseite
47 Axialer Vorsprung am Gehäusesegment
48 Axialer Rücksprung am Gehäusesegment
48a Außenwand
49 Axialer Vorsprung am Trommelsegment
50 Axialer Rücksprung am Trommelsegment
50a Innenwand
51 Dichtungsring
52 Stufe zur Rücksprungverbreiterung
53 Stufe zur Vorsprungverbreiterung
54 Axiale Ringnut im unteren Gehäusedeckel
55 Axialer Vorsprung am oberen Gehäusedeckel
56 Axialer Vorsprung an der Trommelhalterung
57 Gewindebohrung
58 Gemeinsamer Axialvorsprung
59 Gemeinsame Axialnut
60 Montageflansch
61 Ventilachse
62 Flansch von Druckluftleitung
63 Verbindungsring
64 Schweißnaht
65 Ringdichtung
66 (äußerer) Ringspalt
66a innerer Ringspalt
67 rohrabschnittförmiger Einsatz
68 Spannelement
69 Innenzylinder
70 Deckel
71 Innenumfangswand
72 Stirnseite
73 Außenumfang
74 Seitenwange
75 Verbindungsabschnitt
76 Gestuftes Rohr
A Abwasser
D Druckluft
F Filtrat/ Trinkwasser
S Schlamm

## Patentansprüche

1. Rotationsventil (1) zur zyklischen Zuführung von Druckluft (D) zu wenigstens einer ersten und einer zweiten Wasserfiltrationseinheit (21, 22), umfassend
- ein rohrförmiges Außengehäuse (2) mit zumindest einem ersten Ventilausgang (4) zur Versorgung der ersten Wasserfiltrationseinheit (21) mit der Druckluft (D) und einem axial zu diesem ersten Ventilausgang (4) versetzten zweiten Ventilausgang (5) zur Versorgung der zweiten Wasserfiltrationseinheit (22) mit der Druckluft,
- eine um eine Längsachse (61) drehbar im Außengehäuse (2) angeordnete Trommel (3) mit einem Einlass (16) für die Druckluft (D) und zumindest einer ersten und einer zweiten Zuführungsöffnung (7, 8, 9), die axial zueinander versetzt sind, wobei bei einer Drehung der Trommel (3) um die Längsachse (61) die erste Zuführungsöffnung (7) den ersten Ventilausgang (4) in einem ersten Winkelbereich (α1, α2) überlappt, um die Druckluft (D) dem ersten Ventilausgang (4) zuzuführen, und in einem zweiten Winkelbereich (β1, β2) nicht überlappt, und die zweite Zuführungsöffnung (8) den zweiten Ventilausgang (5) in dem ersten Winkelbereich (α1, α2) nicht überlappt und in dem zweiten Winkelbereich (β1, β2) überlappt, um die Druckluft (D) dem zweiten Ventilausgang (5) zuzuführen, und
- einen Aktor (10), der mit der Trommel (3) in Wirkverbindung steht, um diese relativ zum Außengehäuse (2) zu drehen,
**dadurch gekennzeichnet, dass** das Außengehäuse (2) aus axial gefügten Segmenten (2a, 2b, 2c) zusammengesetzt ist, von denen ein erstes Gehäusesegment (2a) den ersten Ventilausgang (4) und ein zweites Gehäusesegment (2b) den zweiten Ventilausgang (5) aufweist.

2. Rotationsventil nach Anspruch 1, **dadurch gekennzeichnet, dass** das Außengehäuse (2) ein drittes Gehäusesegment (2c) mit einem dritten Ventilausgang (6) aufweist, der zur Versorgung einer dritten Wasserfiltrationseinheit mit der Druckluft (D) vorgesehen ist, und dass die Trommel (3) eine dritte Zuführungsöffnung (9) derart aufweist, dass bei der Drehung der Trommel (3) um die Längsachse (61) die dritte Zuführungsöffnung (7) den dritten Ventilausgang (6) in einem dritten Winkelbereich (γ1, γ2) überlappt, um die Druckluft (D) dem dritten Ventilausgang (4) zuzuführen, und in dem ersten und zweiten Winkelbereich (α1, α2, β1, β2) nicht überlappt und dass in dem dritten Winkelbereich (γ1, γ2) die erste Zuführungsöffnung (7) den erste Ventilausgang (4) und die zweite Zuführungsöffnung (8) den zweiten Ventilausgang (5) nicht überlappt.

3. Rotationsventil nach einem der vorherigen Ansprüche, **dadurch gekennzeichnet, dass** die Trommel (3) aus axial gefügten Segmenten (3a, 3b, 3c) zusammengesetzt ist, wobei ein erstes Trommelsegment (3a) die erste Zuführungsöffnung (7) und ein zweites Trommelsegment (3b) die zweite Zuführungsöffnung (8) aufweist.

4. Rotationsventil zumindest nach Anspruch 2 und 3, **dadurch gekennzeichnet, dass** die Trommel (3) ein drittes Trommelsegment (3a) mit der dritten Zuführungsöffnung (9) aufweist.

5. Rotationsventil nach einem der vorherigen Ansprüche, **dadurch gekennzeichnet, dass** jedes Gehäusesegment (2a, 2b, 2c) an einem Axialende einen ringförmigen axialen Vorsprung (47) aufweist, mit dem es in das benachbarte Gehäusesegment (2b, 2c) oder in einen Gehäuseflansch (15), insbesondere in einen ringförmigen axialen Rücksprung (48) hineinragt.

6. Rotationsventil nach Anspruch 5, **dadurch gekennzeichnet, dass** die Gehäusesegmente (2a, 2b, 2c) an ihren Axialenden mittels des entsprechenden Vorsprungs (47) miteinander verpresst sind, oder ein Gehäusesegment (2b, 2c) mittels seines Vorsprungs (47) mit dem Gehäuseflansch (15) verpresst ist.

7. Rotationsventil nach einem der vorherigen Ansprüche, **dadurch gekennzeichnet, dass** das Außengehäuse (2) an seinen axialen Stirnseiten jeweils an einen Gehäuseflansch (13, 15) anschließt und mittels Zugstangen (39), die an den Gehäuseflanschen (13, 15) befestigt sind, zwischen den Gehäuseflanschen (13, 15) verspannt ist.

8. Rotationsventil nach einem der vorherigen Ansprüche, **dadurch gekennzeichnet, dass** die Gehäusesegmente (2a, 2b, 2c) an ihren axialen Stirnseiten jeweils einen radial nach außen gerichteten Montageflansch (60) aufweisen, mit dem sie miteinander oder mit einem Gehäuseflansch (13, 15) befestigt sind.

9. Rotationsventil zumindest nach Anspruch 3, **dadurch gekennzeichnet, dass** jedes Trommelsegment (3a, 3b, 3c) an einem Axialende einen ringförmigen axialen Vorsprung (49) aufweist, mit dem es in das benachbarte Trommelsegmente (2a, 2b, 2c) oder einen Gehäuseflansch (15), insbesondere in einen ringförmigen axialen Rücksprung (50) hineinragt.

10. Rotationsventil nach Anspruch 9, **dadurch gekennzeichnet, dass** die Trommelsegmente (3a, 3b, 3c) an ihren Axialenden mittels des jeweiligen Vorsprungs (49) miteinander verpresst sind.

11. Rotationsventil nach einem der vorherigen Ansprüche, **dadurch gekennzeichnet, dass** die Ventilausgänge (4, 5, 6) jeweils von einem Anschlussstutzen (17) umrahmt sind, an den eine Druckleitung (33) zu einer der Wasserfiltrationseinheiten (21, 22) anschließbar ist.

12. Rotationsventil nach einem der vorherigen Ansprüche, **dadurch gekennzeichnet, dass** die Trommel (3) einen Innendurchmesser von 80mm bis 250mm aufweist.

13. Rotationsventil nach einem der vorherigen Ansprüche, **dadurch gekennzeichnet, dass** es wenigstens einen Übergangswinkelbereich (αβ βα) zwischen dem ersten und zweiten Winkelbereich (α2, β) gibt, in dem die erste Zuführungsöffnung (7) den ersten Ventilausgang (4) teilweise überlappt und gleichzeitig die zweite Zuführungsöffnung (8) den zweiten Ventilausgang (5) teilweise überlappt.

14. Rotationsventil nach einem der vorherigen Ansprüche, **dadurch gekennzeichnet, dass** die Gehäusesegmente (2a, 2b, 2c) im Bereich ihres einen Axialendes und im Bereich des gegenüberliegenden anderen Axialendes jeweils einen die Trommel (3) lagernden Lagerring (45) tragen, dessen Innenumfangsfläche an der Trommel (3) anliegt.

15. Rotationsventil nach einem der vorherigen Ansprüche, **dadurch gekennzeichnet, dass** der Aktor (10) an einem axialen Ende des Außengehäuses (2) angeordnet ist, insbesondere an einem das Außengehäuse (2) an einem axialen Ende abschließenden Gehäuseflansch (13).

16. Rotationsventil nach einem der vorherigen Ansprüche, **dadurch gekennzeichnet, dass** ein Dichtungsring (51) im Verbindungsbereich zwischen zwei benachbarten Gehäusesegmenten (2a, 2b, 2c) angeordnet ist, insbesondere in einem Ringraum, der durch zwei axial zueinander versetzte Stufen (52, 53) gebildet ist, von denen eine Stufe (53) im Vorsprung (47) des einen Gehäusesegments (2a, 2b, 2c) und eine Stufe (52) im Rücksprung (48) des anderen Gehäusesegments (2a, 2b, 2c) vorliegt.

17. Rotationsventil zumindest nach Anspruch 3, **dadurch gekennzeichnet, dass** die Trommelsegmente (3a, 3b, 3c) innerhalb eines begrenzten Umfangswinkelbereichs relativ zueinander drehbar sind und erst mit Erreichen eines ein Ende des Umfangswinkelbereichs definierenden Anschlags eine Drehmitnahme eines benachbarten zweiten Trommelsegments (3a, 3b, 3c) durch ein sich drehendes erstes Trommelsegment erfolgt (3a, 3b, 3c), wobei der Umfangswinkelbereich 360° geteilt durch die Anzahl n der Ventilausgänge (4, 5, 6) beträgt.

18. Rotationsventil zumindest nach Anspruch 3, **dadurch gekennzeichnet, dass** innerhalb eines jeden Ventilausgangs (4, 5, 6) ein Einsatz (67) in Form eines Rohrabschnitts eingesetzt ist, der aus dem jeweiligen Ventilausgang (4, 5, 6), die Innenumfangswand des entsprechenden Segments (2a, 2b, 2c) des Gehäuses (2) überragend, hervorsteht, und einen radialen Ringspalt (66) überbrückend mit einer Stirnseite (72) an dem entsprechenden Trommelsegment (3a, 3b, 3c) dichtend anliegt.

19. Rotationsventil zumindest nach Anspruch 18, **dadurch gekennzeichnet, dass** ein Spannelement (68) vorgesehen ist, das den jeweiligen Einsatz (67) in Richtung des entsprechenden Trommelsegments (3a, 3b, 3c) drückt.
